# EUROPÄISCHE PATENTSCHRIFT

(11) **EP 3 317 112 B1**
(45) Veröffentlichungstag und Bekanntmachung des Hinweises auf die Patenterteilung: **14.08.2019**
(21) Anmeldenummer: 16731582.9
(22) Anmeldetag: 22.06.2016
(51) Int. Cl.: B42D 25/29, G02B 5/18, B42D 25/328

(54) **OPTISCHE SICHERHEITSVORRICHTUNG**
OPTICAL SECURITY DEVICE
DISPOSITIF OPTIQUE DE SÉCURITÉ

(30) Priorität: 01.07.2015 DE 102015110626
(43) Veröffentlichungstag der Anmeldung: 09.05.2018
(73) Patentinhaber: Sectago GmbH, 66123 Saarbruecken (DE)
(72) Erfinder: ROGIN, Peter, 66123 Saarbrücken (DE); KOCH, Markus, 66953 Pirmasens (DE); SEILS, Frank, 79692 Kleines Wiesental (DE)
(74) Vertreter: WSL Patentanwälte Partnerschaft mbB
(86) Internationale Anmeldenummer: PCT/EP2016/064355
(87) Internationale Veröffentlichungsnummer: WO 2017/001254

(56) Entgegenhaltungen:
- WO-A1-2014/124781
- DE-T2- 69 117 369
- US-A- 5 784 200

## Beschreibung

Die vorliegende Erfindung betrifft eine optische Sicherheitsvorrichtung mit einem Träger und einer Mehrzahl von auf einer Oberfläche des Trägers verteilt angeordneten Flächenelementen mit einem ersten diffraktiven Element, wobei das erste diffraktive Element eine sich in einer ersten Richtung periodisch wiederholende Struktur aufweist, wobei die Flächenelemente mit dem ersten diffraktiven Element eine Mehrzahl von Gruppen mit jeweils mindestens zwei Flächenelementen bilden, wobei die Flächenelemente mit dem ersten diffraktiven Element einer jeden Gruppe derart angeordnet und ausgestaltet sind, dass die ersten diffraktiven Elemente für einen Beobachter oder eine Beobachtungseinrichtung einen Bildpunkt eines ersten Bildes erzeugen, wobei sich das erste Bild aus den von der Mehrzahl von Gruppen erzeugten Bildpunkten zusammensetzt, wobei die Flächenelemente derart angeordnet und ausgestaltet sind, dass in einem Betrieb der Sicherheitsvorrichtung die Anzahl von Flächenelementen einer Gruppe, die einen Bildpunkt des ersten Bildes erzeugen, oder die an der Erzeugung des Bildpunktes beteiligten Flächenelemente der Gruppe von einem Einfallswinkel, unter dem Licht von einer Lichtquelle auf die Sicherheitsvorrichtung fällt, oder von einem Beobachtungswinkel, unter dem der Beobachter oder die Beobachtungseinrichtung die Sicherheitsvorrichtung beobachtet, abhängt, und wobei die Flächenelemente derart angeordnet und ausgestaltet sind, dass in dem Betrieb der Sicherheitsvorrichtung eine Position des ersten Bildes in einem Beobachtungsraum für den Beobachter oder die Beobachtungsvorrichtung von dem Einfallswinkel oder dem Beobachtungswinkel abhängt.

Sicherheitsrelevante Dokumente, insbesondere Ausweisdokumente, wie Reisepässe, Personalausweise und Führerscheine, sowie Zahlungsmittel, wie Kreditkarten, Banknoten und Bankkarten, weisen heute eine Vielzahl von Sicherheitsvorrichtungen auf, die ein Fälschen der Dokumente und Zahlungsmittel schwierig oder unmöglich machen sollen, wobei derartige Sicherheitseinrichtung beispielsweise als Sicherheitsfaden, Aufreißfaden, Sicherheitsstreifen, Sicherheitsband, Patch oder Etikett ausgebildet sind. Dabei handelt es sich insbesondere um Sicherheitsvorrichtungen, die mit dem menschlichen Auge sichtbare Merkmale erzeugen, die es auch dem geschulten Laien ermöglichen, Originale von Fälschungen zu unterscheiden.

Diese optischen Sicherheitsvorrichtungen basieren auf ganz unterschiedlichen optischen Effekten. Aus der WO 2014/124781 ist beispielsweise eine Sicherheitsvorrichtung bekannt, bei welcher ein Träger auf einer Oberfläche mit einer Vielzahl von Flächenelementen, von denen jedes ein Beugungsgitter als diffraktives Element aufweist, bedeckt ist. Diese Flächenelemente mit den Beugungsgittern sind in eine Mehrzahl von Gruppen mit jeweils mindestens zwei Flächenelementen aufgeteilt.

Diese Aufteilung in Gruppen ist logischer Natur derart, dass die Flächenelemente einer Gruppe jeweils zusammen einen Bildpunkt eines Bildes erzeugen. Dabei sind jedoch die Flächenelemente einer solchen Gruppe derart angeordnet und ausgestaltet, dass in Abhängigkeit von einem Einfallswinkel oder einem Beobachtungswinkel, unter dem ein Beobachter oder eine Beobachtungseinrichtung die Sicherheitsvorrichtung beobachtet, eine unterschiedliche Anzahl von Flächenelementen oder unterschiedliche individuelle Flächenelemente zur Erzeugung des Bildpunktes beitragen. Auf diese Weise wird erreicht, dass der Bildpunkt, welcher von einer Gruppe von Flächenelementen erzeugt wird, in Abhängigkeit von dem Einfallswinkel oder dem Beobachtungswinkel eine unterschiedliche Position in einem Beobachtungsraum aufweist. Im Zusammenwirken der Mehrzahl von Gruppen von Flächenelementen erscheint daher für einen Beobachter das gesamte Bild in Abhängigkeit von dem Einfallswinkel oder dem Beobachtungswinkel an unterschiedlichen Positionen des Beobachtungsraums.

Durch geeignete Anordnung und Ausgestaltung der Flächenelemente und ihrer Zuordnung zu den die einzelnen Bildpunkte bildenden Gruppen lässt sich zudem erreichen, dass bei einer Bewegung der Sicherheitsvorrichtung, welche den Einfallswinkel oder den Beobachtungswinkel ändert, ein Beobachter oder eine Beobachtungseinrichtung eine kontinuierliche Bewegung des Bildes innerhalb des Beobachtungsraums wahrnimmt.

Aus der DE 691 17 369 T2 ist ein Verfahren zum Erzeugen zweidimensionaler holografischer Strukturen bekannt. Dabei wird die gewünschte Struktur aus einer großen Mehrzahl einzelner Flecken gebildet, wobei jeder Fleck ein holografisches Beugungsgitter mit einem vorbestimmten Gitterabstand und vorbestimmter Winkelorientierung für diesen Fleck aufweist. Eine Veränderung der Winkelorientierung und/oder des Gitterabstands zwischen den Flecken und/oder Gruppen von Flecken schafft den gewünschten holografischen Effekt. Die Fleckstellen können wie gewünscht variieren, einschließlich von Stellen, die eine gewünschte Struktur herausziehen, und zweidimensionaler orthogonaler Matrizen, in denen eine Struktur durch Variationen zwischen Flecken oder Gruppen von Flecken, wie in einer Rasterablenkabbildung, gezeichnet wird.

Gegenüber diesem Stand der Technik ist es Aufgabe der vorliegenden Erfindung, eine optische Sicherheitsvorrichtung bereitzustellen, welche einen höheren Grad an Gestaltungsfreiheit bei der Auswahl der dargestellten Bilder aufweist sowie einen verbesserten Kopierschutz bietet. Eine weitere Aufgabe ist es, die Erzeugung von helleren bzw. brillanteren Bildern zu ermöglichen. Darüber hinaus ist es eine Aufgabe der vorliegenden Erfindung, eine Sicherheitsvorrichtung bereitzustellen, die es ermöglicht, zwei oder mehr Bilder zu erzeugen, welche bei einer Änderung des Einfallswinkels oder des Beobachtungswinkels für den Beobachter eine voneinander abweichend, bspw. gegenläufige Bewegung in dem Beobachtungsraum ausführen. Noch eine weitere Aufgabe der vorliegenden Erfindung ist es, eine Sicherheitsvorrichtung bereitzustellen, um eine ungerade Anzahl von Bildern größer eins zu erzeugen.

Zumindest eine der zuvor genannten Aufgaben wird durch eine optische Sicherheitsvorrichtung gelöst mit einem Träger und einer Mehrzahl von auf einer Oberfläche des Trägers verteilt angeordneten Flächenelementen mit einem ersten diffraktiven Element, wobei das erste diffraktive Element eine sich in einer ersten Richtung periodisch wiederholende Struktur aufweist, wobei die Flächenelemente mit dem ersten diffraktives Element eine Mehrzahl von Gruppen mit jeweils mindestens zwei Flächenelementen bilden, wobei die Flächenelemente mit dem ersten diffraktiven Element einer jeden Gruppe derart angeordnet und ausgestaltet sind, dass die ersten diffraktiven Elemente für einen Beobachter oder eine Beobachtungseinrichtung einen Bildpunkt eines ersten Bildes erzeugen, wobei sich das erste Bild aus den von der Mehrzahl von Gruppen erzeugten Bildpunkten zusammensetzt, wobei die Flächenelemente derart angeordnet und ausgestaltet sind, dass in einem Betrieb der Sicherheitsvorrichtung die Anzahl von Flächenelementen einer Gruppe, die einen Bildpunkt des ersten Bildes erzeugen, oder die an der Erzeugung des Bildpunktes beteiligten Flächenelemente der Gruppe von einem Einfallswinkel, unter dem Licht von einer Lichtquelle auf die Sicherheitsvorrichtung fällt, oder von einem Beobachtungswinkel, unter dem der Beobachter oder die Beobachtungseinrichtung die Sicherheitsvorrichtung beobachtet, abhängt, und wobei die Flächenelemente derart angeordnet und ausgestaltet sind, dass in dem Betrieb der Sicherheitsvorrichtung eine Position des ersten Bildes in einem Beobachtungsraum für den Beobachter oder die Beobachtungsvorrichtung von dem Einfallswinkel oder dem Beobachtungswinkel abhängt, wobei mindestens ein Flächenelement zusätzlich zu dem ersten diffraktiven Element ein zweites diffraktives Element mit einer sich in einer zweiten Richtung periodisch wiederholenden Struktur aufweist, wobei die erste Richtung und die zweite Richtung voneinander verschieden sind, wobei sich das erste und das zweite diffraktive Element auf dem Flächenelement zumindest teilweise räumlich überlagern, wobei das Flächenelement mit dem zweiten diffraktiven Element einen Teil einer Gruppe mit mindestens zwei Flächenelementen bildet, wobei das Flächenelement mit dem zweiten diffraktiven Element derart angeordnet und ausgestaltet ist, dass die diffraktiven Elemente der Flächenelemente der Gruppe für einen Beobachter oder eine Beobachtungseinrichtung einen Bildpunkt des ersten Bildes oder eines zweiten Bildes in dem Beobachtungsraum erzeugen, und wobei die Flächenelemente einer ersten Gruppe von Flächenelementen, die einen Bildpunkt des ersten Bildes in dem Beobachtungsraum erzeugen und die Flächenelemente einer zweiten Gruppe von Flächenelementen, die einen Bildpunkt des zweiten Bildes in dem Beobachtungsraum erzeugen, derart angeordnet und ausgestaltet sind, dass in einem vorgegebenen Beobachtungsabstand ein Beobachter oder eine Beobachtungseinrichtung den Bildpunkt des ersten Bildes und den Bildpunkt des zweiten Bildes nicht mehr als getrennte Bildpunkte erkennen kann, sondern einen einzigen Bildpunkt mit einer, verglichen mit einem von nur einer Gruppe erzeugten Bildpunkt, erhöhten Intensität wahrnimmt.

In einer Ausführungsform der Erfindung weist der Träger ein thermoplastisches Material, beispielsweise eine Folie aus einem thermoplastischen Material auf. In einer anderen Ausführungsform weist der Träger ein thermoplastisches Material auf, das auf den Träger in flüssiger Form aufgebracht und anschließend, bevorzugt durch Bestrahlung mit UV-Licht ausgehärtet wird.

In einer Ausführungsform sind die Flächenelemente mit den ersten und zweiten Beugungsgittern in das thermoplastische Material strukturiert. Dabei umfasst der Träger in einer Ausführungsform eine lichtreflektierende Schicht, beispielsweise einen metallischen Film, welcher die Unterseite und/oder die Oberseite des Trägers bildet, oder auch eine metallische Folie, die bspw. den Träger selbst bildet. In einer anderen Ausführungsform ist eine lichtreflektierende Schicht, bspw. eine dielektrische, dichroitische oder eine metallische Schicht, bevorzugt mit Aluminium, auf der dem Träger abgewandten Oberseite der mit den ersten und zweiten Beugungsgittern in das thermoplastische Material strukturierten Flächenelemente aufgebracht.

In einer weiteren Ausführungsform, die sich bevorzugt für den Betrieb der Sicherheitsvorrichtung in Transmission eignet, ist eine lichtbrechende Schicht, auf der dem Träger abgewandten Oberseite der mit den ersten und zweiten Beugungsgittern in das Material strukturierten Flächenelemente aufgebracht, deren Brechungsindex sich vom strukturierten thermoplastischen Material der Flächenelemente unterscheidet. Bevorzugt besteht diese lichtbrechende Schicht aus einem Material mit einem hohen Brechungsindex, einem sogenannten HRI-Material.

Die diffraktiven Elemente weisen ein beliebiges, bspw. sinusförmiges, rechteckiges oder dreieckiges, Oberflächenprofil auf. Die diffraktiven Elemente können transparent auf einem transparenten oder reflektierenden Träger angeordnet sein oder auch selbstreflektierend ausgebildet sein.

Daher gibt es Ausführungsformen der optischen Sicherheitsvorrichtung gemäß der vorliegenden Erfindung, welche in Reflexion arbeiten und solche, die in Transmission arbeiten. Während bei einer optischen Sicherheitsvorrichtung, welche in Reflexion arbeitet, die Bilder auf der Seite des Trägers entstehen, auf der auch eine Lichtquelle angeordnet ist, entsteht bei einer Anordnung, die in Transmission arbeitet, das Bild auf der der Lichtquelle abgewandten Seite des Trägers.

Es ist die grundlegende Idee der Sicherheitsvorrichtung gemäß der vorliegenden Erfindung, eine Mehrzahl von Flächenelementen, die jeweils mindestens eine diffraktive Struktur aufweisen, derart auf der Oberfläche des Trägers zu verteilen und anzuordnen, dass die Flächenelemente Gruppen bilden, wobei die Flächenelemente einer Gruppe einen Bildpunkt eines ersten Bildes erzeugen.

Unter einem diffraktiven Element im Sinne der vorliegenden Anmeldung wird jede beugende Struktur verstanden, wobei in einer Ausführungsform der Erfindung das diffraktive Element ein Beugungsgitter ist. Um auf elektromagnetische Strahlung diffraktiv zu wirken, muss das diffraktive Element eine sich periodisch wiederholende Struktur, insbesondere eine Linienstruktur, aufweisen. In einer Ausführungsform der Erfindung ist ein solches Gitter als Blazegitter realisiert. Auf diese Weise kann eine Beugungsordnung gegenüber den anderen Beugungsordnungen hervorgehoben werden. Auf diese Weise lassen sich Bilder realisieren, die nicht wiederholt werden, d.h. von denen es nur ein einziges Exemplar gibt.

Wenn in der vorliegenden Anmeldung von einer Richtung der sich periodisch wiederholenden Struktur gesprochen wird, so wird damit die Richtung bezeichnet, in welcher sich die Struktur wiederholt. Dies ist in einer Ausführungsform der Erfindung eine Richtung senkrecht zu den Linien eines Gitters.

Allgemeiner ausgedrückt weist die Oberfläche des Trägers eine Oberflächennormale auf, welche senkrecht zu einer ebenen Fläche ist, welche der Träger bedeckt. Diese ebene Fläche ist zu unterscheiden von der Oberfläche, welche die einzelnen diffraktiven Elemente aufweisen, und die eine andere Richtung aufweisen können als die hier bezeichnete Oberflächennormale. Diese Oberflächennormale des diffraktiven Elements wird auch als Gitternormale bezeichnet. Mit der Richtung, in welcher sich die diffraktive Struktur periodisch wiederholt, wird in dieser Beschreibung die azimutale Richtung der ersten Beugungsordnung, welche das diffraktive Element erzeugt, bezeichnet. Man kann also sagen, dass das erste diffraktive Element einen Gittervektor mit einer ersten azimutalen Richtung und das zweite diffraktive Element einen Gittervektor mit einer zweiten azimutalen Richtung bezogen auf die Gitternormale aufweist.

Eine Gruppe fasst eine Mehrzahl von Flächenelementen logisch und funktional zusammen, wobei die Flächenelemente einer Gruppe keinen räumlichen Zusammenhang auf der Oberfläche des Trägers aufweisen müssen. Die Flächenelemente einer einzelnen Gruppe sind vielmehr funktional dadurch miteinander verbunden, dass ihre diffraktiven Elemente zusammenwirken und zusammen einen einzigen Bildpunkt eines Bildes erzeugen. Es versteht sich, dass die Mindestanzahl von zwei Flächenelementen nur wenig praktikabel ist und typischerweise eine Vielzahl von Flächenelementen zu einer Gruppe gehören und gemeinsam einen Bildpunkt erzeugen.

Das gesamte Bild setzt sich dann aus den Bildpunkten einer Mehrzahl von Gruppen von Flächenelementen zusammen.

Betrachtet man einzelne der Gruppen von Flächenelementen unter gegebenen Beobachtungsbedingungen, d.h. vorgegebenen Einfallswinkeln und Beobachtungswinkeln, so wird für jede der sichtbaren Beugungsordnungen die Bedingung, dass das Licht in die Richtung des Beobachters abgelenkt wird, an einer anderen Position mit der Fläche der Sicherheitseinrichtung erfüllt. Entsprechend können je nach Ausgestaltung der diffraktiven Elemente mehrere Exemplare des Bildes an unterschiedlichen Positionen dargestellt werden. In dem Fall, dass der visuelle Gesamteindruck im Wesentlichen durch die beiden ersten Beugungsordnungen erzeugt wird, werden also insbesondere zwei Exemplare des Bildes sichtbar werden.

Jedes diffraktive Element kann grundsätzlich gleichzeitig Beugungsmuster unterschiedlicher Ordnung erzeugen. Im Sprachgebrauch dieser Anmeldung erzeugt eine Gruppe von Flächenelementen genau einen Bildpunkt. Allerdings kann dieser Bildpunkt in mehreren Exemplaren erscheinen, so dass auch das Bild mehrfach erscheint.

Ein solches Bild, insbesondere das erste Bild oder das zweite Bild im Sinne der vorliegenden Anmeldung, kann eine beliebige Form oder Kontur aufweisen. Beispielsweise kann ein solches Bild ein geometrisches Symbol sein, wie zum Beispiel ein Kreis oder ein Stern. Ein Bild im Sinne der vorliegenden Anmeldung kann aber auch einen Buchstaben oder eine Ziffer darstellen oder jegliche Kombination derartiger Symbole.

Die einzelnen Flächenelemente können unterschiedliche Grundflächen, wie Kreise, Vierecke, etc. oder Kombinationen davon aufweisen.

Die Anzahl von Flächenelementen, welche eine Gruppe bilden, wird durch das Design der Sicherheitsvorrichtung festgelegt. Allerdings sind die Flächenelemente aller Gruppen derart auf der Oberfläche des Trägers verteilt, dass, betrachtet man die Flächenelemente einer einzigen Gruppe, entweder die Anzahl der an der Erzeugung des Bildpunktes dieser Gruppe beteiligten Flächenelemente oder aber die Auswahl der an der Erzeugung des Bildpunktes dieser Gruppe beteiligten Flächenelemente, dies in einer Ausführungsform auch bei gleicher Anzahl der beteiligten Flächenelemente, von einem Einfallswinkel oder einem Beobachtungswinkel abhängt.

Dabei wird im Sinne der vorliegenden Erfindung unter dem Einfallswinkel der Winkel verstanden, unter welchem Licht von einer Lichtquelle, beispielsweise der Sonne oder einer künstlichen Lichtquelle, auf die Sicherheitsvorrichtung fällt. Der Einfallswinkel ist dabei der Winkel zwischen der oben beschriebenen Gitternormale, d.h. dem Einfallslot des Trägers und dem einfallenden Strahl in einer Betrachtung der geometrischen Optik. Bei einer ebenen Wellenfront entspricht der Einfallsstrahl einer Senkrechten auf der Wellenfront.

Unter dem Beobachtungswinkel wird derjenige Winkel verstanden, unter welchem gemessen gegen die Gitternormale ein Beobachter oder auch eine Beobachtungseinrichtung, beispielsweise eine Kamera, die Sicherheitsvorrichtung beobachtet.

Darüber hinaus sind die Flächenelemente derart auf der Oberfläche des Trägers angeordnet und derart ausgestaltet, dass im Betrieb der Sicherheitsvorrichtung eine Position des ersten Bildes in einem Beobachtungsraum für den Beobachter oder die Beobachtungsvorrichtung von dem Einfallswinkel und/oder dem Beobachtungswinkel abhängt.

Mit anderen Worten ausgedrückt, hängt die Position eines Bildpunktes, der immer von der gleichen Gruppe von Flächenelementen erzeugt wird, davon ab, unter welchem Einfallswinkel die Sicherheitsvorrichtung beleuchtet wird und/oder unter welchem Beobachtungswinkel sie beobachtet wird. Auf diese Weise führt eine Änderung des Einfallswinkels und/oder des Beobachtungswinkels, beispielsweise durch eine Verkippung der Sicherheitsvorrichtung zu einer von dem Betrachter wahrnehmbaren Bewegung eines jeden Bildpunktes und damit des gesamten Bildes.

Bei einer genügend großen Anzahl von Flächenelementen führen bereits geringe Winkeländerungen zu einer Änderung der Position der Bildpunkte und damit des Bildes. Ist diese Positionsänderung pro Winkeländerung ebenfalls klein, so nimmt der Betrachter eine kontinuierliche und/oder gleichförmige Bewegung des Bildes wahr.

Jedes Flächenelement einer Gruppe, welche einen Bildpunkt des Bildes darstellt, stellt den Bildpunkt in Abhängigkeit von dem Einfallswinkel und/oder dem Beobachtungswinkel in einem oder mehreren Teilbereichen des Beobachtungsraums dar. Die einzelnen Teilbereiche des Beobachtungsraums einer Gruppe, welche durch ein Flächenelement oder mehrere Flächenelemente dargestellt werden, können sich partiell oder vollflächig überlagern, sodass die Summe aller Teilbereiche den kompletten Beobachtungsraum darstellt und das Bild im gesamten Beobachtungsraum wahrgenommen werden kann. Durch die Überlagerung / Überlappung der einzelnen Teilbereiche des Beobachtungsraums entsteht bei einer Winkeländerung des Einfallswinkels und/oder des Beobachtungswinkels für den Beobachter eine kontinuierliche Bewegung des Bildes bzw. der Bilder.

In einer einfachen Ausführungsform handelt es sich bei der wahrgenommenen Bewegung der Bilder um eine Verschiebung, die proportional zu einer Winkeländerung des Einfallswinkels und/oder des Beobachtungswinkels ist. Die Position des Bildes, die einer verschwindenden Richtungsänderung, d.h. direkten Reflektion oder Transmission, entspricht, erscheint in einer Ausführungsform als Schwerpunkt der Bewegung, um den das Bild bei einer entsprechenden Winkeländerung zu kreisen scheint.

In anderen Ausführungsformen kann an Stelle einer Proportionalität eine andere funktionale Abhängigkeit gewählt werden. In einer weiteren Ausführungsform wird eine Proportionalität mit stark unterschiedlichen Proportionalitätskonstanten in zwei zueinander senkrechten Bewegungsrichtungen realisiert, sodass von einem Beobachter näherungsweise eine Linearbewegung des Symbols wahrgenommen wird.

In einer weiteren Ausführungsform folgen das erste Bild und das zweite Bild unterschiedlichen Bewegungsmustern. Dabei wird der Eindruck einer kontinuierlichen Veränderung der insgesamt von dem ersten Bild und dem zweiten Bild dargestellten Szenerie als Funktion von Einfallswinkel oder Beobachtungswinkel erzielt.

Erfindungsgemäß weist mindestens ein Flächenelement zusätzlich zu dem ersten diffraktiven Element ein zweites diffraktives Element mit einer sich in einer zweiten Richtung periodisch wiederholenden Struktur auf, wobei die erste Richtung und die zweite Richtung voneinander verschieden sind. Mit anderen Worten ausgedrückt, weist dieses Flächenelement zwei einander räumlich überlagerte diffraktive Elemente mit unterschiedlicher Ausrichtung ihrer periodischen Strukturen auf. Man kann auch sagen, dass die ersten und zweiten diffraktiven Elemente Beugungsmuster erster Ordnung haben, welche unter voneinander verschiedenen Azimutalwinkeln angeordnet sind.

Dabei ist es für die Erfindung entscheidend, dass das erste und das zweite diffraktive Element einander zumindest teilweise räumlich überlagern, d.h. sie nehmen beide zumindest abschnitts- oder teilweise die gleiche Fläche des Flächenelements ein, sodass bei gleichem Flächenverbrauch die Anzahl der diffraktiven Elemente erhöht werden kann. In einer Ausführungsform der Erfindung überlagern sich das erste und das zweite diffraktive Element räumlich vollständig, d.h. sie sind flächengleich und bedecken dieselbe Fläche des Flächenelements, sodass bei gleichem Flächenverbrauch die Anzahl der diffraktiven Elemente verdoppelt werden kann.

Während hier und im Folgenden der Fall eines Flächenelements mit genau zwei voneinander abweichend ausgerichteten, sich zumindest teilweise räumlich überlagernden diffraktiven Elementen betrachtet wird, sind Ausführungsformen denkbar, bei denen eine Mehrzahl von Flächenelementen mehr als zwei voneinander verschiedene, sich zumindest teilweise räumlich überlagernde diffraktive Elemente aufweisen. In einer Ausführungsform weist ein Flächenelement bis zu zwölf sich zumindest teilweise räumlich überlagernde diffraktive Elemente auf.

Während mindestens eines der Flächenelemente der Vorrichtung, vorzugsweise aber eine Mehrzahl von Flächenelementen. ein erstes und ein zweites diffraktives Element, d.h. mindestens zwei diffraktive Elemente, aufweisen, ist es nicht notwendig, dass alle Flächenelemente mindestens zwei diffraktive Elemente aufweisen.

Dabei unterscheidet die vorliegende Anmeldung zwischen Ausführungsformen, bei welchen die ersten und zweiten diffraktiven Elemente gemeinsam die Bildpunkte nur eines einzigen ersten Bildes erzeugen und solchen Ausführungsformen, bei welchen die ersten diffraktiven Elemente Bildpunkte eines ersten Bildes erzeugen, während die zweiten diffraktiven Elemente Bildpunkte eines zweiten Bildes erzeugen.

Daher weist in einer Ausführungsform der Erfindung eine Mehrzahl von Flächenelementen zusätzlich zu dem ersten diffraktiven Element ein zweites diffraktives Element mit einer sich in einer zweiten Richtung periodisch wiederholenden Struktur auf, wobei die erste Richtung und die zweite Richtung voneinander verschieden sind, wobei sich das erste und das zweite diffraktive Element auf dem Flächenelement zumindest teilweise räumlich überlagern, wobei die Flächenelemente mit dem zweiten diffraktiven Element eine Mehrzahl von Gruppen mit jeweils mindestens zwei Flächenelementen bilden, wobei die Flächenelemente mit dem zweiten diffraktiven Element derart angeordnet und ausgestaltet sind, dass die zweiten diffraktiven Elemente der Flächenelemente einer Gruppe für einen Beobachter oder eine Beobachtungseinrichtung einen Bildpunkt eines zweiten Bildes in dem Beobachtungsraum erzeugen, wobei sich das zweite Bild aus den von der Mehrzahl von Gruppen von Flächenelementen mit dem zweiten diffraktiven Element erzeugten Bildpunkten zusammensetzt, wobei die Flächenelemente derart angeordnet und ausgestaltet sind, dass in einem Betrieb der Sicherheitsvorrichtung die Anzahl von Flächenelementen einer Gruppe, die einen Bildpunkt des zweiten Bildes erzeugen, oder die an der Erzeugung des zweiten Bildpunktes beteiligten Flächenelemente der Gruppe von dem Einfallswinkel oder von dem Beobachtungswinkel abhängt, und wobei die Flächenelemente derart angeordnet und ausgestaltet sind, dass in dem Betrieb der Sicherheitsvorrichtung eine Position des zweiten Bildes in dem Beobachtungsraum für den Beobachter oder die Beobachtungsvorrichtung von dem Einfallswinkel oder dem Beobachtungswinkel abhängt.

Wie zur Erzeugung des ersten Bildes auch, sind die Flächenelemente mit dem zweiten diffraktiven Element in einer solchen Ausführungsform in einer Mehrzahl von Gruppen mit jeweils mindestens zwei Flächenelementen zusammengefasst. Wie zuvor für das erste Bild beschrieben erzeugen die Flächenelemente mit dem zweiten diffraktiven Element einer Gruppe für einen Beobachter oder eine Beobachtungseinrichtung einen Bildpunkt eines zweiten Bildes in dem Beobachtungsraum.

Dabei kann ein und dasselbe Flächenelement, welches zwei diffraktive Elemente aufweist, einer Gruppe zugeordnet sein, deren Flächenelemente einen Bildpunkt des ersten Bildes generieren, und gleichzeitig einer zweiten Gruppe, deren Flächenelemente einen Bildpunkt des zweiten Bildes generieren. In einer Ausführungsform jedoch können eine Gruppe, deren Flächenelemente einen Bildpunkt des ersten Bildes erzeugen und eine Gruppe, deren Flächenelemente einen Bildpunkt des zweiten Bildes erzeugen, die gleichen Flächenelemente enthalten bzw. umfassen.

Die Flächenelemente sind derart angeordnet und ausgestaltet, dass in einem Betrieb der Sicherheitsvorrichtung die Anzahl von Flächenelementen mit dem zweiten diffraktiven Element einer Gruppe, die einen Bildpunktdes zweiten Bildes erzeugen, oder die an der Erzeugung des zweiten Bildpunktes beteiligten Flächenelemente der Gruppe (bei konstanter Anzahl) von dem Einfallswinkel oder dem Beobachtungswinkel abhängt, und dass in dem Betrieb der Sicherheitsvorrichtung eine Position des zweiten Bildes in dem Beobachtungsraum für den Beobachter oder die Beobachtungsvorrichtung von dem Einfallswinkel und dem Beobachtungswinkel abhängt.

Auch für das zweite Bild führt demnach eine Verkippung der Sicherheitsvorrichtung, d. h. eine Änderung des Einfallswinkels und/oder des Beobachtungswinkels zu einer Positionsänderung des zweiten Bildes, welcher für den Beobachter oder die Beobachtungsvorrichtung als Bewegung des zweiten Bildes wahrnehmbar ist.

Zwar lassen sich auch ohne die erfindungsgemäße Überlagerung einer Mehrzahl von diffraktiven Elementen auf einem einzigen Flächenelement mit einer einzigen Sicherheitsvorrichtung zwei oder mehr verschiedene Bilder erzeugen, allerdings erzielt die erfindungsgemäße Vorrichtung den Vorteil, dass unter der Annahme einer identischen Größe der Oberfläche des Trägers und identischer Größe der Flächenelemente eine höhere Brillanz bzw. Intensität der einzelnen Bilder erzeugt wird. Zudem gibt es einen größeren Freiheitsgrad bei der Gestaltung der einzelnen Bilder.

In einer Ausführungsform der Erfindung sind die Flächenelemente derart angeordnet und ausgestaltet, dass in einem Betrieb der Sicherheitsvorrichtung bei einer, vorzugsweise gleichförmigen, Änderung des Einfallswinkels oder des Beobachtungswinkels von dem Beobachter oder der Beobachtungseinrichtung eine, vorzugsweise gleichförmige, Bewegung des ersten Bildes und eine, vorzugsweise gleichförmige, Bewegung des zweiten Bildes in dem Beobachtungsraum wahrnehmbar sind.

In einer Ausführungsform der Erfindung liegen die wahrnehmbaren Bewegungen des ersten Bildes und des zweiten Bildes auf gekrümmten, vorzugsweise kreisförmigen oder teilkreisförmigen, Bahnen.

Dabei können diese gekrümmten Bahnen des ersten und des zweiten Bildes in einer Ausführungsform identische Krümmungsmittelpunkte oder aber voneinander verschiedene Krümmungsmittelpunkte haben. Die Krümmungsmittelpunkte können innerhalb der von den Flächenelementen bedeckten Oberfläche des Trägers der Sicherheitsvorrichtung liegen oder aber in einer Ausführungsform auch außerhalb davon.

Auf diese Weise lassen sich viele interessante Bewegungsmuster mit einem hohen Wiedererkennungseffekt erzeugen.

In einer Ausführungsform der Erfindung weisen die gekrümmten Bahnen der Bewegungen des ersten Bildes und des zweiten Bildes gegenüber einer Kantenlänge des Trägers, vorzugsweise gegenüber einer Kantenlänge der von den Flächenelementen bedeckten Oberfläche des Trägers, große Krümmungsradien auf, so dass die Bewegungen des ersten Bildes und des zweiten Bildes als lineare Bewegungen wahrnehmbar sind.

In einer Ausführungsform der Erfindung ist die wahrnehmbare Bewegung des ersten Bildes gegenläufig zu der wahrnehmbaren Bewegung des zweiten Bildes.

Zu diesem Zweck ist in einer Ausführungsform die Anordnung aller Flächenelemente mit dem ersten diffraktiven Element in einer Gruppe spiegelsymmetrisch zu einer Anordnung der Flächenelemente mit dem zweiten diffraktiven Element in einer anderen Gruppe. Alternative Anordnungen der Flächenelemente, die zu einer gegenläufigen wahrnehmbaren Bewegung des ersten und des zweiten Bildes führen sind möglich.

In einer Ausführungsform der Erfindung sind das erste diffraktive Element und das zweite diffraktive Element für den gleichen Wellenlängenbereich des Lichtes bzw. der elektromagnetischen Strahlung geeignet. Daher sind in einer Ausführungsform der Erfindung die Gitterkonstante des ersten diffraktiven Elements und die Gitterkonstante des zweiten diffraktiven Elements gleich. In einer weiteren Ausführungsform der Erfindung ist die zweite Gitterkonstante des zweiten diffraktiven Elements kleiner als die erste Gitterkonstante des ersten diffraktiven Elements des gleichen Flächenelements, wobei das Verhältnis aus der ersten Gitterkonstante und der zweiten Gitterkonstante kleiner als 10, vorzugsweise kleiner als 5 und besonders bevorzugt kleiner als 3 ist.

In einer Ausführungsform der Erfindung sind die erste Gitterkonstante des ersten diffraktiven Elements und die zweite Gitterkonstante des zweiten diffraktiven Elements des gleichen Flächenelements jeweils kleiner als 10 µm, bevorzugt liegen die erste Gitterkonstante und die zweite Gitterkonstante jeweils in einem Bereich von 0,2 µm bis 5 µm.

In einer Ausführungsform der Erfindung unterscheiden sich die erste Richtung des ersten diffraktiven Elements und die zweite Richtung des zweiten diffraktiven Elements eines Flächenelements derart voneinander, dass ein Beobachter oder eine Beobachtungseinrichtung die von diesen diffraktiven Elementen erzeugten Bildpunkte in einem vorgegebenen Beobachtungsabstand als getrennte Bildpunkte erkennen kann. Anders ausgedrückt hängt die notwendige Unterscheidung der Ausrichtung der beiden diffraktiven Elemente auf den Flächenelementen vom räumlichen Auflösungsvermögen des Beobachters bzw. der Beobachtungseinrichtung und dem Abstand von der Sicherheitsvorrichtung ab, in denen die ersten und zweiten Bilder erzeugt werden.

In der der Sicherheitsvorrichtung gemäß der vorliegenden Erfindung sind die Flächenelemente einer ersten Gruppe von Flächenelementen, die einen Bildpunkt des ersten Bildes in dem Beobachtungsraum erzeugen, und die Flächenelemente einer zweiten Gruppe von Flächenelementen, die
einen Bildpunkt des zweiten Bildes in dem Beobachtungsraum erzeugen, derart angeordnet und ausgestaltet, dass in einem vorgegebenen Beobachtungsabstand ein Beobachter oder eine Beobachtungseinrichtung den Bildpunkt des ersten Bildes und den Bildpunkt des zweiten Bildes nicht mehr als getrennte Bildpunkte erkennen kann, sondern einen einzigen Bildpunkt mit einer, verglichen mit einem von nur einer Gruppe erzeugten Bildpunkt, erhöhten Intensität wahrnimmt. Mit anderen Worten ausgedrückt werden das erste Bild und das zweite Bild im Beobachtungsraum im Wesentlichen an der gleichen Position erzeugt, so dass sie für den Beobachter als ein einziges Bild und nicht als getrennte Bilder wahrnehmbar sind. Es versteht sich, dass in einer solchen Ausführungsform das erste und das zweite Bild vorzugsweise im Wesentlichen identisch sind. In dieser Ausführungsform dienen die diffraktiven Elemente eines einzigen Flächenelements nicht zum Erhöhen der pro Fläche der Sicherheitsvorrichtung erzeugten und getrennt wahrnehmbaren Bildpunkte und Bilder sondern stattdessen zum Erhöhen der Intensität der erzeugten Bildpunkte eines einzigen wahrnehmbaren Bildes.

In einer Ausführungsform der Erfindung schließen die erste Richtung des ersten diffraktiven Elements und die zweite Richtung des zweiten diffraktiven Elements einen Winkel von mehr als 1°, bevorzugt von mindestens 15° ein.

In einer Ausführungsform der Erfindung ist die Oberfläche des Trägers zu mindestens 10 %, vorzugsweise zu mindestens 30 % und besonders bevorzugt zu mindestens 50 % mit Flächenelementen bedeckt.

In einer Ausführungsform der Erfindung sind die Flächenelemente derart angeordnet und ausgestaltet, dass für einen vorgegebenen Beleuchtungswinkel und einen vorgegebenen Beobachtungswinkel das erste Bild und das zweite Bild von jeweils weniger als 10 %, vorzugsweise weniger als 2 %, aller Flächenelemente der Sicherheitsvorrichtung gebildet werden.

Zumindest eine der zuvor genannten Aufgaben wird auch gelöst durch einen Gegenstand, insbesondere ein Dokument, ein Personaldokument, eine Urkunde, ein Zahlungsmittel, eine Banknote, einen Scheck, eine Bankkarte, eine Kreditkarte, eine Ware oder eine Verpackung mit einer Sicherheitsvorrichtung so wie sie zuvor in Ausführungsformen beschrieben wurde. Dabei wird die Sicherheitsvorrichtung auf einem solchen Gegenstand zum Zwecke des Fälschungs-, Kopier-, Produkt- und/oder Markenschutzes verwendet.

Soweit im folgenden Aspekte der Erfindung im Hinblick auf ein Verfahren zum Herstellen einer Sicherheitsvorrichtung beschrieben werden, so gelten diese auch für die zuvor beschriebene erfindungsgemäße Sicherheitsvorrichtung und umgekehrt.

Weiterhin wird zumindest eine der zuvor genannten Aufgaben auch durch Verfahren zum Herstellen einer Sicherheitsvorrichtung gelöst, wobei das Verfahren die Schritte aufweist: Bereitstellen eines Trägers und Ausbilden einer Mehrzahl von verteilt angeordneten Flächenelementen mit einem ersten diffraktiven Element, wobei das erste diffraktive Element eine sich in einer ersten Richtung periodisch wiederholende Struktur aufweist, auf einer Oberfläche des Trägers, derart dass die Flächenelemente mit dem ersten diffraktiven Element eine Mehrzahl von Gruppen mit jeweils mindestens zwei Flächenelementen bilden, die Flächenelemente mit dem ersten diffraktiven Element einer jeden Gruppe derart angeordnet und ausgestaltet sind, dass die ersten diffraktiven Elemente für einen Beobachter oder eine Beobachtungseinrichtung einen Bildpunkt eines ersten Bildes erzeugen, wobei sich das erste Bild aus den von der Mehrzahl von Gruppen erzeugten Bildpunkten zusammensetzt, die Flächenelemente derart angeordnet und ausgestaltet sind, dass in einem Betrieb der Sicherheitsvorrichtung die Anzahl von Flächenelementen einer Gruppe, die einen Bildpunkt des ersten Bildes erzeugen, oder die an der Erzeugung des Bildpunktes beteiligten Flächenelemente der Gruppe von einem Einfallswinkel, unter dem Licht von einer Lichtquelle auf die Sicherheitsvorrichtung fällt, oder von einem Beobachtungswinkel β, unter dem der Beobachter oder die Beobachtungseinrichtung die Sicherheitsvorrichtung beobachtet, abhängt, und die Flächenelemente derart angeordnet und ausgestaltet sind, dass in dem Betrieb der Sicherheitsvorrichtung eine Position des ersten Bildes in einem Beobachtungsraum für den Beobachter oder die Beobachtungsvorrichtung von dem Einfallswinkel α oder dem Beobachtungswinkel β abhängt, wobei das Verfahren zusätzlich den Schritt umfasst Ausbilden mindestens eines Flächenelements, so dass es zusätzlich zu dem ersten diffraktiven Element ein zweites diffraktives Element mit einer sich in einer zweiten Richtung periodisch wiederholenden Struktur aufweist, wobei die erste Richtung und die zweite Richtung voneinander verschieden sind, derart, dass sich das erste und das zweite diffraktive Element auf dem Flächenelement zumindest teilweise räumlich überlagern, das Flächenelement mit dem zweiten diffraktiven Element einen Teil einer Gruppe mit mindestens zwei Flächenelementen bildet, das Flächenelement mit dem zweiten diffraktiven Element derart angeordnet und ausgestaltet ist, dass die diffraktiven Elemente der Flächenelemente der Gruppe für einen Beobachter oder eine Beobachtungseinrichtung einen Bildpunkt des ersten Bildes oder eines zweiten Bildes in dem Beobachtungsraum erzeugen und die Flächenelemente einer ersten Gruppe von Flächenelementen, die einen Bildpunkt des ersten Bildes in dem Beobachtungsraum erzeugen und die Flächenelemente einer zweiten Gruppe von Flächenelementen, die einen Bildpunkt des zweiten Bildes in dem Beobachtungsraum erzeugen, derart angeordnet und ausgestaltet sind, dass in einem vorgegebenen Beobachtungsabstand ein Beobachter oder eine Beobachtungseinrichtung den Bildpunkt des ersten Bildes und den Bildpunkt des zweiten Bildes nicht mehr als getrennte Bildpunkte erkennen kann, sondern einen einzigen Bildpunkt mit einer, verglichen mit einem von nur einer Gruppe erzeugten Bildpunkt, erhöhten Intensität wahrnimmt.

Dabei wird in einer Ausführungsform der Erfindung eine Mehrzahl von Flächenelementen so ausgebildet, dass die Flächenelemente zusätzlich zu dem ersten diffraktiven Element ein zweites diffraktives Element mit einer sich in einer zweiten Richtung periodisch wiederholenden Struktur aufweisen, wobei die erste Richtung und die zweite Richtung voneinander verschieden sind, wobei sich das erste und das zweite diffraktive Element auf dem Flächenelement zumindest teilweise räumlich überlagern, wobei die Flächenelemente mit dem zweiten diffraktiven Element eine Mehrzahl von Gruppen mit jeweils mindestens zwei Flächenelementen bilden, wobei die Flächenelemente mit dem zweiten diffraktiven Element derart angeordnet und ausgestaltet sind, dass die zweiten diffraktiven Elemente der Flächenelemente einer Gruppe für einen Beobachter oder eine Beobachtungseinrichtung einen Bildpunkt eines zweiten Bildes in dem Beobachtungsraum erzeugen, wobei sich das zweite Bild aus den von der Mehrzahl von Gruppen von Flächenelementen mit dem zweiten diffraktiven Element erzeugten Bildpunkten zusammensetzt, wobei die Flächenelemente derart angeordnet und ausgestaltet sind, dass in einem Betrieb der Sicherheitsvorrichtung die Anzahl von Flächenelementen einer Gruppe, die einen Bildpunkt des zweiten Bildes erzeugen, oder die an der Erzeugung des zweiten Bildpunktes beteiligten Flächenelemente der Gruppe von dem Einfallswinkel oder von dem Beobachtungswinkel abhängt, und wobei die Flächenelemente derart angeordnet und ausgestaltet sind, dass in dem Betrieb der Sicherheitsvorrichtung eine Position des zweiten Bildes in dem Beobachtungsraum für den Beobachter oder die Beobachtungsvorrichtung von dem Einfallswinkel oder dem Beobachtungswinkel abhängt.

Das Ausbilden der Flächenelemente mit dem oder den diffraktiven Elementen auf der Oberfläche des Trägers kann in einer Ausführungsform derart erfolgen, dass der Träger aus einem thermoplastischen Material besteht bzw. thermoplastisches Material aufweist und die Struktur der Flächenelemente von einem Abformelement auf das thermoplastische Material übertragen wird. Insbesondere kann dies mittels Prägeverfahren erfolgen.

Zudem wird zumindest eine der zuvor genannten Aufgaben durch Verfahren zum Herstellen eines Gegenstands, insbesondere eines Dokuments, Personaldokuments, einer Urkunde, eines Zahlungsmittels, einer Banknote, eines Schecks, einer Bankkarte, einer Kreditkarte, einer Ware oder einer Verpackung, gelöst, wobei das Verfahren die Schritte aufweist: Bereitstellen des Gegenstands, Herstellen der Sicherheitsvorrichtung mit dem Verfahren nach Anspruch 13 und Aufbringen der Sicherheitsvorrichtung auf den Gegenstand.

Weitere Vorteile, Merkmale und Anwendungsmöglichkeiten der vorliegenden Erfindung werden anhand der folgenden Beschreibung einer Ausführungsform und der dazugehörigen Figuren deutlich.
- Figur 1: zeigt schematisch die Anordnung einer Ausführungsform einer erfindungsgemäßen Sicherheitsvorrichtung zwischen einer Lichtquelle und einem Betrachter.
- Figur 2 a): zeigt eine Draufsicht auf eine schematische Ausführungsform einer Sicherheitsvorrichtung.

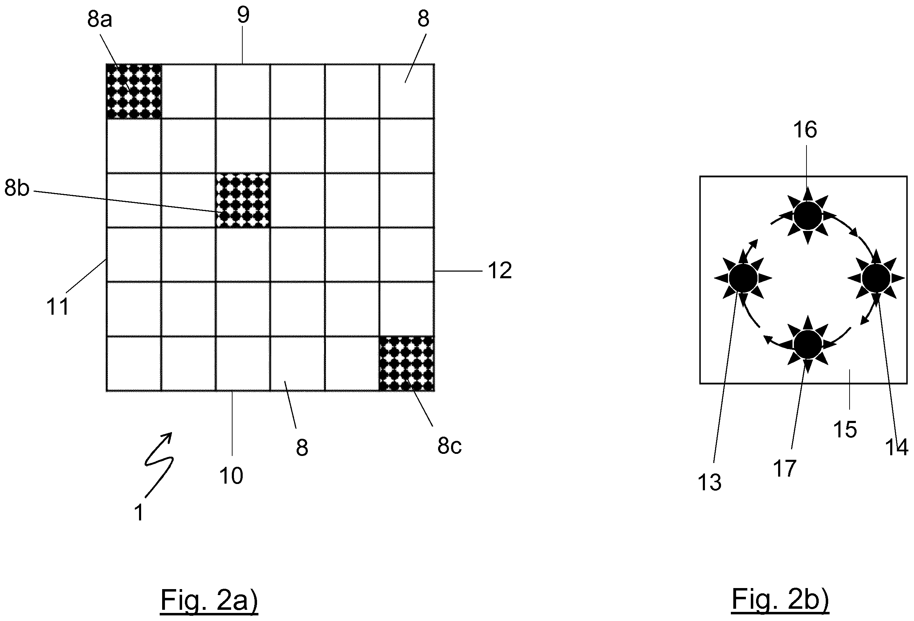

- Figur 2 b): zeigt schematisch die mit der Sicherheitsvorrichtung aus Figur 2 a) erzeugten und für einen Betrachter wahrnehmbaren Bilder.

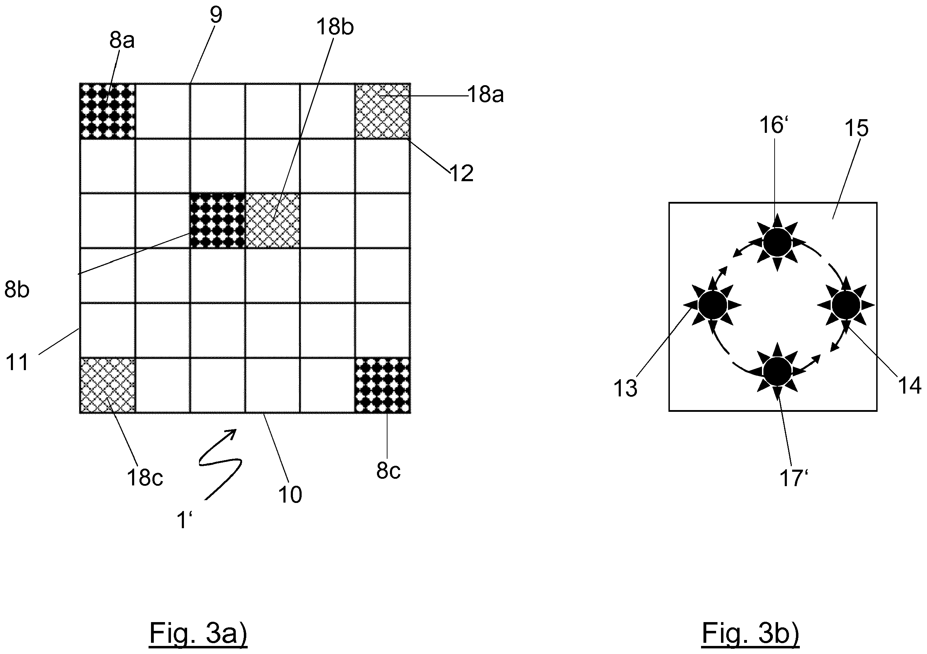

- Figur 3 a): zeigt eine alternative, schematische Ausführungsform einer Sicherheitsvorrichtung.
- Figur 3 b): zeigt die mit der Sicherheitsvorrichtung aus Figur 3 a) erzeugten und für einen Betrachter wahrnehmbaren Bilder.

In den Figuren sind identische Elemente mit identischen Bezugszeichen bezeichnet.

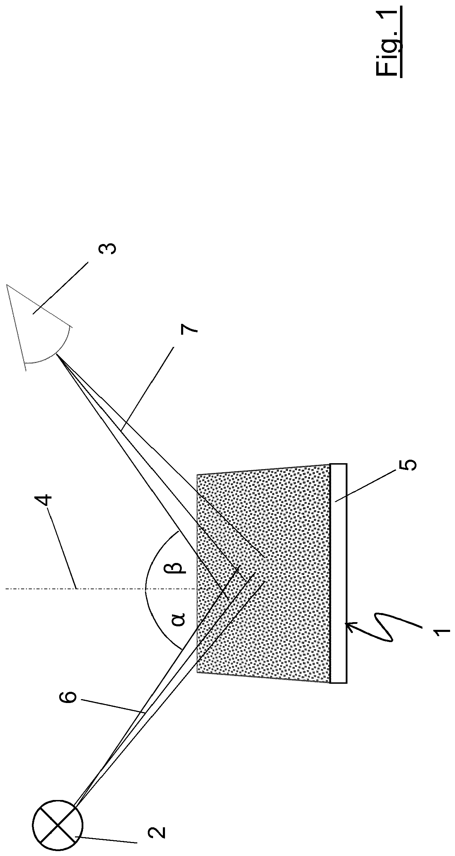

Figur 1 zeigt schematisch die Anordnung der erfindungsgemäßen Sicherheitsvorrichtung 1 zwischen einer Lichtquelle 2 und dem Auge 3 eines Beobachters. Ebenfalls dargestellt ist die Gitternormale 4, welche senkrecht auf einer von dem Träger 5 der Sicherheitsvorrichtung bedeckten ebenen Fläche steht. Der Einfallswinkel α ist der Winkel zwischen der von der Lichtquelle 2 auf die Sicherheitsvorrichtung 1 einfallenden Strahlung 6 und der Gitternormale 4 in einer Ebene, welche von der Gitternormale 4 und dem Einfallsstrahl 6 aufgespannt wird. Analog dazu ist der Beobachtungswinkel β der Winkel zwischen der Gitternormalen 4 und einem Strahl 7 von der Sicherheitsvorrichtung 1 zu dem Auge 3 des Betrachters.

Die Funktion der Sicherheitsvorrichtung 1 wird nun anhand der schematischen Darstellung einer solchen Sicherheitsvorrichtung 1 aus Figur 2 a) beschrieben. Die Oberfläche des Trägers 5 der Sicherheitsvorrichtung 1 ist in der dargestellten Ausführungsform vollständig in Flächenelemente 8 aufgeteilt. In der gezeigten Ausführungsform ist die in den Flächenelementen 8 bedeckte Oberfläche quadratisch ebenso wie die Flächenelemente 8 selbst auch quadratisch sind.

Mit den Bezugszeichen 8a, 8b und 8c sind in der Ausführungsform aus Figur 2 a) drei Flächenelemente bezeichnet, die zusammen eine Gruppe von Flächenelementen bilden. Jedes der Flächenelemente 8 weist in der dargestellten Ausführungsform zwei um 90° gegeneinander gedrehte Gitter mit identischer Gitterkonstante auf. Diese beiden Gitter sind einander räumlich auf den Flächenelementen überlagert.

Daher zeigen die Flächenelemente 8a, 8b, 8c aus Figur 2 a) in der schematischen Darstellung ein Schachbrettmuster. Während die ersten Gitter der Flächenelemente 8a, 8b, 8c so ausgerichtet sind, dass sich ihre Linien parallel zu den unteren und oberen Kanten 9, 10 der Sicherheitsvorrichtung 1 erstrecken, erstrecken sich die Linien der zweiten Gitter der Flächenelemente 8a, 8b, 8c parallel zu den rechten bzw. linken Kanten 11, 12 der Sicherheitsvorrichtung 1.

In der dargestellten Ausführungsform wird eine Gruppe von Flächenelementen mit dem ersten Gitter von den gleichen Flächenelementen 8a, 8b, 8c gebildet, wie eine Gruppe von Flächenelementen mit den zweiten Gittern.

Die Gruppe von Flächenelementen 8a, 8b, 8c erzeugt einen einzigen Bildpunkt eines ersten Bildes mit Hilfe der ersten Gitter und einen einzigen Bildpunkt eines zweiten Bildes mit Hilfe der zweiten Gitter. Die Bildpunkte, die mit den ersten Gittern anderer Gruppen von Flächenelementen 8 der Sicherheitsvorrichtung 1 erzeugt werden, bilden zusammen mit dem Bildpunkt der ersten Gitter der Gruppe aus den Flächenelementen 8a, 8b, 8c das erste Bild.

In der dargestellten Ausführungsform wird angenommen, dass das erste Bild aus einem Stern in einem Beobachtungsraum 15, hier einer Ebene, besteht und das zweite Bild ebenfalls aus einem Stern im gleichen Beobachtungsraum 15 besteht. Dabei erscheint jedes der Bilder in zwei Exemplaren 13, 14 bzw. 16, 17. Die Sterne 13, 14 des ersten Bildes um 90° gegenüber den Sternen 16, 17 des zweiten Bildes gedreht. Dies ist schematisch in Figur 2 b) dargestellt.

Die Flächenelemente 8 sind nun derart über die Oberfläche der Sicherheitsvorrichtung 1 verteilt angeordnet und die Gitter sind derart eingerichtet, dass in Abhängigkeit von Einfallswinkel α und Beobachtungswinkel β unterschiedliche Flächenelemente 8a, 8b, 8c der Gruppe an der Generierung des Bildpunktes beteiligt sind. Betrachtet man nun einmal drei verschiedene Winkelpaare aus Einfallswinkel α und Beobachtungswinkel β, so tragen für das erste Winkelpaar die beiden Flächenelemente 8a, 8b zur Erzeugung des Bildpunktes bei, für das zweite Winkelpaar tragen die Flächenelemente 8b, 8c zur Erzeugung des Bildpunktes bei und für das dritte Winkelpaar entsprechend die Flächenelemente 8a, 8c. In Abhängigkeit davon, welche der Flächenelemente 8a, 8b, 8 c der dargestellten Gruppe von Flächenelementen den Bildpunkt des ersten Bildes generieren, befindet sich dieser an einer anderen Position innerhalb des Beobachtungsraums 15. In der dargestellten Ausführungsform kann der von der Gruppe mit den Flächenelementen 8a, 8b, 8c erzeugte Bildpunkt demnach drei verschiedene Positionen innerhalb des Beobachtungsraums 15 einnehmen.

Skaliert man die schematische Anordnung aus Figur 2 a) auf eine viel größere Anzahl von Flächenelementen 8 hoch, so wird deutlich, dass dann bereits eine kleine Winkeländerung der Winkel α, β eine kleine Positionsänderung eines jeden Bildpunktes und damit des gesamten Bildes bewirkt. Auf diese Weise führt eine kontinuierliche Verkippung der Sicherheitsvorrichtung 1 zu einem kontinuierlichen Wandern der Bildpunkte und damit der ersten und zweiten Bilder. In der dargestellten Ausführungsform bewegen sich das erste Bild 13, 14 und das zweite Bild 16, 17 jeweils auf einer kreisförmigen Bahn um einen Mittelpunkt in der Mitte des Beobachtungsraumes bzw. in der Mitte der Sicherheitsvorrichtung 1. Dies mit der gleichen Bewegungsrichtung.

Figur 3 a) zeigt eine alternative Ausführungsform der Sicherheitsvorrichtung 1'. Diese unterscheidet sich von der Sicherheitsvorrichtung 1 aus Figur 2 a) dadurch, dass die Flächenelemente 8a, 8b, 8c nur in Bezug auf ihre ersten Gitter zu einer Gruppe gehören, die einen Bildpunkt des ersten Bildes 13, 14 generiert. Die den Bildpunkt des um 90° gegenüber dem ersten Bild gedrehten zweiten Bildes 16', 17' erzeugenden Gitter liegen auf zu den Flächenelementen 8a, 8b, 8c spiegelbildlichen Flächenelementen 18a, 18b und 18c. Diese Flächenelemente 18a, 18b und 18c bilden in Bezug auf ihre zweiten Gitter eine Gruppe.

Durch diese spiegelbildliche Anordnung der beteiligten Flächenelemente an der Erzeugung der Bildpunkte des ersten und des zweiten Bildes führen diese beiden Bilder bei einer Verkippung der Sicherheitsvorrichtung 1' eine gegenläufige Rotationsbewegung aus.

Die dieser Erfindung zugrundeliegende optische Sicherheitsvorrichtung ist bestens zur Kombination mit weiteren Sicherheitsmerkmalen geeignet, denen andere physikalische und/ oder stoffliche Eigenschaften zugrunde liegen. Dies können beispielsweise diffraktive, refraktive, reflektive, polarisierende, phasenschiebende, elektrisch leitfähige, magnetische, farbige, fluoreszierende, phosphoreszierende, sonstige lumineszierende Eigenschaften, und/oder infrarot-aktive Eigenschaften sein. Auch kann die erfindungsgemäße Sicherheitsvorrichtung mit elektronischen Komponenten auf zu schützenden Artikeln, wie bspw. Wertdokumenten, kombiniert sein und/ oder maschinenlesbar ausgeführt werden.

Im Falle, dass die erfindungsgemäße Sicherheitsvorrichtung mit anderen, in oder auf thermoplastischem Material erzeugten Elementen, wie bspw. Hologrammen und/oder optischen Linsen kombiniert wird, ist es vorteilhaft, diese Kombination mittels eines gemeinsamen Abformelementes zu erzeugen, wobei die resultierende Sicherheitsvorrichtung die unterschiedlichen Merkmale in räumlicher Trennung oder vorteilhaft in Form gegenseitiger Überlagerung darstellt.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1, 1': Sicherheitsvorrichtung
- 2: Lichtquelle
- 3: Auge
- 4: Gitternormale
- 5: Träger
- 6: Strahlung, Einfallsstrahl
- 7: gebeugter Strahl
- 8, 8a, 8b, 8c: Flächenelement
- 9, 10, 11, 12: Kante der Sicherheitsvorrichtung 1, 1'
- 13, 14: erstes Bild
- 16, 16', 17, 17': zweites Bild
- 15: Beobachtungsraum
- 18a, 18b, 18c: Flächenelement

## Patentansprüche

1. Optische Sicherheitsvorrichtung (1, 1') mit
einem Träger (5) und
einer Mehrzahl von auf einer Oberfläche des Trägers (5) verteilt angeordneten Flächenelementen (8, 8a, 8b, 8c, 18a, 18b, 18c) mit einem ersten diffraktiven Element, wobei das erste diffraktive Element eine sich in einer ersten Richtung periodisch wiederholende Struktur aufweist,
wobei die Flächenelemente (8, 8a, 8b, 8c, 18a, 18b, 18c) mit dem ersten diffraktiven Element eine Mehrzahl von Gruppen mit jeweils mindestens zwei Flächenelementen (8, 8a, 8b, 8c, 18a, 18b, 18c) bilden,
wobei die Flächenelemente (8, 8a, 8b, 8c, 18a, 18b, 18c) mit dem ersten diffraktiven Element einer jeden Gruppe derart angeordnet und ausgestaltet sind, dass die ersten diffraktiven Elemente für einen Beobachter (3) oder eine Beobachtungseinrichtung einen Bildpunkt eines ersten Bildes (13, 14) erzeugen, wobei sich das erste Bild (13, 14) aus den von der Mehrzahl von Gruppen erzeugten Bildpunkten zusammensetzt,
wobei die Flächenelemente (8, 8a, 8b, 8c, 18a, 18b, 18c) derart angeordnet und ausgestaltet sind, dass in einem Betrieb der Sicherheitsvorrichtung (1, 1') die Anzahl von Flächenelementen (8, 8a, 8b, 8c, 18a, 18b, 18c) einer Gruppe, die einen Bildpunkt des ersten Bildes (13, 14) erzeugen, oder die an der Erzeugung des Bildpunktes beteiligten Flächenelemente (8, 8a, 8b, 8c, 18a, 18b, 18c) der Gruppe von einem Einfallswinkel (α), unter dem Licht von einer Lichtquelle (2) auf die Sicherheitsvorrichtung (1, 1') fällt, oder von einem Beobachtungswinkel (β), unter dem der Beobachter (3) oder die Beobachtungseinrichtung die Sicherheitsvorrichtung (1, 1') beobachtet, abhängt, und
wobei die Flächenelemente (8, 8a, 8b, 8c, 18a, 18b, 18c) derart angeordnet und ausgestaltet sind, dass in dem Betrieb der Sicherheitsvorrichtung (1, 1') eine Position des ersten Bildes (13, 14) in einem Beobachtungsraum (15) für den Beobachter (3) oder die Beobachtungsvorrichtung von dem Einfallswinkel (α) oder dem Beobachtungswinkel (β) abhängt,
**dadurch gekennzeichnet, dass**
mindestens ein Flächenelement (8, 8a, 8b, 8c, 18a, 18b, 18c) zusätzlich zu dem ersten diffraktiven Element ein zweites diffraktives Element mit einer sich in einer zweiten Richtung periodisch wiederholenden Struktur aufweist, wobei die erste Richtung und die zweite Richtung voneinander verschieden sind,
wobei sich das erste und das zweite diffraktive Element auf dem Flächenelement (8, 8a, 8b, 8c, 18a, 18b, 18c) zumindest teilweise räumlich überlagern,
wobei das Flächenelement (8, 8a, 8b, 8c, 18a, 18b, 18c) mit dem zweiten diffraktiven Element einen Teil einer Gruppe mit mindestens zwei Flächenelementen (8, 8a, 8b, 8c, 18a, 18b, 18c) bildet,
wobei das Flächenelement (8, 8a, 8b, 8c, 18a, 18b, 18c) mit dem zweiten diffraktiven Element derart angeordnet und ausgestaltet ist, dass die diffraktiven Elemente der Flächenelemente (8, 8a, 8b, 8c, 18a, 18b, 18c) der Gruppe für einen Beobachter (3) oder eine Beobachtungseinrichtung einen Bildpunkt des ersten Bildes oder eines zweiten Bildes (16, 17, 16', 17') in dem Beobachtungsraum (15) erzeugen, und
wobei die Flächenelemente (8, 8a, 8b, 8c, 18a, 18b, 18c) einer ersten Gruppe von Flächenelementen, die einen Bildpunkt des ersten Bildes in dem Beobachtungsraum erzeugen, und die Flächenelemente (8, 8a, 8b, 8c, 18a, 18b, 18c) einer zweiten Gruppe von Flächenelementen, die einen Bildpunkt des zweiten Bildes in dem Beobachtungsraum erzeugen, derart angeordnet und ausgestaltet sind, dass in einem vorgegebenen Beobachtungsabstand ein Beobachter (3) oder eine Beobachtungseinrichtung den Bildpunkt des ersten Bildes und den Bildpunkt des zweiten Bildes nicht mehr als getrennte Bildpunkte erkennen kann, sondern einen einzigen Bildpunkt mit einer, verglichen mit einem von nur einer Gruppe erzeugten Bildpunkt, erhöhten Intensität wahrnimmt.

2. Optische Sicherheitsvorrichtung (1, 1') nach Anspruch 1, **dadurch gekennzeichnet, dass** eine Mehrzahl von Flächenelementen (8, 8a, 8b, 8c, 18a, 18b, 18c) zusätzlich zu dem ersten diffraktiven Element ein zweites diffraktives Element mit einer sich in einer zweiten Richtung periodisch wiederholenden Struktur aufweist, wobei die erste Richtung und die zweite Richtung voneinander verschieden sind,
wobei sich das erste und das zweite diffraktive Element auf dem Flächenelement (8, 8a, 8b, 8c, 18a, 18b, 18c) zumindest teilweise räumlich überlagern,
wobei die Flächenelemente (8, 8a, 8b, 8c, 18a, 18b, 18c) mit dem zweiten diffraktiven Element eine Mehrzahl von Gruppen mit jeweils mindestens zwei Flächenelementen (8, 8a, 8b, 8c, 18a, 18b, 18c) bilden,
wobei die Flächenelemente (8, 8a, 8b, 8c, 18a, 18b, 18c) mit dem zweiten diffraktiven Element derart angeordnet und ausgestaltet sind, dass die zweiten diffraktiven Elemente der Flächenelemente (8, 8a, 8b, 8c, 18a, 18b, 18c) einer Gruppe für einen Beobachter (3) oder eine Beobachtungseinrichtung einen Bildpunkt eines zweiten Bildes (16, 17, 16', 17') in dem Beobachtungsraum (15) erzeugen,
wobei sich das zweite Bild (16, 17, 16', 17') aus den von der Mehrzahl von Gruppen von Flächenelementen (8, 8a, 8b, 8c, 18a, 18b, 18c) mit dem zweiten diffraktiven Element erzeugten Bildpunkten zusammensetzt,
wobei die Flächenelemente (8, 8a, 8b, 8c, 18a, 18b, 18c) derart angeordnet und ausgestaltet sind, dass in einem Betrieb der Sicherheitsvorrichtung (1, 1') die Anzahl von Flächenelementen (8, 8a, 8b, 8c, 18a, 18b, 18c) einer Gruppe, die einen Bildpunkt des zweiten Bildes (16, 17, 16', 17') erzeugen, oder die an der Erzeugung des zweiten Bildpunktes beteiligten Flächenelemente (8, 8a, 8b, 8c, 18a, 18b, 18c) der Gruppe von dem Einfallswinkel oder von dem Beobachtungswinkel abhängt, und
wobei die Flächenelemente (8, 8a, 8b, 8c, 18a, 18b, 18c) derart angeordnet und ausgestaltet sind, dass in dem Betrieb der Sicherheitsvorrichtung (1, 1') eine Position des zweiten Bildes (16, 17, 16', 17') in dem Beobachtungsraum (15) für den Beobachter (3) oder die Beobachtungsvorrichtung von dem Einfallswinkel oder dem Beobachtungswinkel abhängt.

3. Sicherheitsvorrichtung (1, 1') nach einem der vorhergehenden Ansprüche, **dadurch gekennzeichnet, dass** die Flächenelemente (8, 8a, 8b, 8c, 18a, 18b, 18c) derart angeordnet und ausgestaltet sind, dass in einem Betrieb der Sicherheitsvorrichtung (1, 1') bei einer Änderung des Einfallswinkels oder des Beobachtungswinkels von dem Beobachter (3) oder der Beobachtungeinrichtung eine Bewegung des ersten Bildes (13, 14) und eine Bewegung des zweiten Bildes (16, 17, 16', 17') in dem Beobachtungraum wahrnehmbar sind.

4. Sicherheitsvorrichtung (1, 1') nach dem vorhergehenden Anspruch, **dadurch gekennzeichnet, dass** die wahrnehmbaren Bewegungen des ersten Bildes (13, 14) und des zweiten Bildes (16, 17, 16', 17') auf gekrümmten, vorzugsweise kreisförmigen oder teilkreisförmigen, Bahnen liegen.

5. Sicherheitsvorrichtung (1, 1') nach dem vorhergehenden Anspruch, **dadurch gekennzeichnet, dass** die gekrümmten Bahnen der Bewegungen des ersten Bildes (13, 14) und des zweiten Bildes (16, 17, 16', 17') groß gegenüber einer Kantenlänge der von den Flächenelementen (8, 8a, 8b, 8c, 18a, 18b, 18c) bedeckten Oberfläche des Trägers (5) sind, so dass die Bewegungen des ersten Bildes (13, 14) und des zweiten Bildes (16, 17, 16', 17') als lineare Bewegungen wahrnehmbar sind.

6. Sicherheitsvorrichtung (1, 1') nach einem der Ansprüche 3 bis 5, **dadurch gekennzeichnet, dass** die Bewegung des ersten Bildes (13, 14) gegenläufig zu der Bewegung des zweiten Bildes (16, 17, 16', 17') ist.

7. Sicherheitsvorrichtung (1, 1') nach einem der vorhergehenden Ansprüche, **dadurch gekennzeichnet, dass** eine Mehrzahl von Flächenelementen (8, 8a, 8b, 8c, 18a, 18b, 18c) mehr als zwei sich zumindest teilweise räumlich überlagernde diffraktive Elemente aufweist, die sich in unterschiedlichen Richtungen periodisch wiederholende Strukturen aufweisen.

8. Sicherheitsvorrichtung (1, 1') nach einem der vorhergehenden Ansprüche, **dadurch gekennzeichnet, dass** das erste diffraktive Element eines Flächenelements (8, 8a, 8b, 8c, 18a, 18b, 18c) eine erste Gitterkonstante aufweist und das zweite diffraktive Element des gleichen Flächenelements (8, 8a, 8b, 8c, 18a, 18b, 18c) eine zweite Gitterkonstante aufweist, wobei die zweite Gitterkonstante kleiner als die erste Gitterkonstante ist und wobei das Verhältnis aus der ersten Gitterkonstante und der zweiten Gitterkonstante kleiner als 10, vorzugsweise kleiner als 5 und, besonders bevorzugt kleiner 3 ist.

9. Sicherheitsvorrichtung (1, 1') nach einem der vorhergehenden Ansprüche, **dadurch gekennzeichnet, dass** das erste diffraktive Element eines Flächenelements (8, 8a, 8b, 8c, 18a, 18b, 18c) eine erste Gitterkonstante aufweist und das zweite diffraktive Element des gleichen Flächenelements (8, 8a, 8b, 8c, 18a, 18b, 18c) eine zweite Gitterkonstante aufweist, wobei die erste Gitterkonstante und die zweite Gitterkonstante gleich sind.

10. Sicherheitsvorrichtung (1, 1') nach einem der vorhergehenden Ansprüche, **dadurch gekennzeichnet, dass** das erste diffraktive Element eines Flächenelements (8, 8a, 8b, 8c, 18a, 18b, 18c) eine erste Gitterkonstante aufweist und das zweite diffraktive Element des gleichen Flächenelements (8, 8a, 8b, 8c, 18a, 18b, 18c) eine zweite Gitterkonstante aufweist, wobei die Gitterkonstanten des ersten diffraktiven Elements und des zweiten diffraktiven Elements jeweils kleiner als 10 µm sind und bevorzugt jeweils in einem Bereich von 0,2µm bis 5 µm liegen.

11. Sicherheitsvorrichtung (1, 1') nach einem der vorhergehenden Ansprüche, **dadurch gekennzeichnet, dass** die erste Richtung des ersten diffraktiven Elements und die zweite Richtung des zweiten diffraktiven Elements einen Winkel von mehr als 1°, bevorzugt von mindestens 15° einschließen.

12. Gegenstand, insbesondere Dokument, Personaldokument, Urkunde, Zahlungsmittel, Banknote, Scheck, Bankkarte, Kreditkarte, Waren oder Verpackung mit einer Sicherheitsvorrichtung (1, 1') nach einem der Ansprüche 1 bis 11.

13. Verfahren zum Herstellen einer Sicherheitsvorrichtung mit den Schritten:
Bereitstellen eines Trägers (5) und
Ausbilden einer Mehrzahl von verteilt angeordneten Flächenelementen (8, 8a, 8b, 8c, 18a, 18b, 18c) mit einem ersten diffraktiven Element, wobei das erste diffraktive Element eine sich in einer ersten Richtung periodisch wiederholende Struktur aufweist, auf einer Oberfläche des Trägers (5), derart dass
die Flächenelemente (8, 8a, 8b, 8c, 18a, 18b, 18c) mit dem ersten diffraktiven Element eine Mehrzahl von Gruppen mit jeweils mindestens zwei Flächenelementen (8, 8a, 8b, 8c, 18a, 18b, 18c) bilden,
die Flächenelemente (8, 8a, 8b, 8c, 18a, 18b, 18c) mit dem ersten diffraktiven Element einer jeden Gruppe derart angeordnet und ausgestaltet sind, dass die ersten diffraktiven Elemente für einen Beobachter (3) oder eine Beobachtungseinrichtung einen Bildpunkt eines ersten Bildes (13, 14) erzeugen, wobei sich das erste Bild (13, 14) aus den von der Mehrzahl von Gruppen erzeugten Bildpunkten zusammensetzt,
die Flächenelemente (8, 8a, 8b, 8c, 18a, 18b, 18c) derart angeordnet und ausgestaltet sind, dass in einem Betrieb der Sicherheitsvorrichtung (1, 1') die Anzahl von Flächenelementen (8, 8a, 8b, 8c, 18a, 18b, 18c) einer Gruppe, die einen Bildpunkt des ersten Bildes (13, 14) erzeugen, oder die an der Erzeugung des Bildpunktes beteiligten Flächenelemente (8, 8a, 8b, 8c, 18a, 18b, 18c) der Gruppe von einem Einfallswinkel (α), unter dem Licht von einer Lichtquelle (2) auf die Sicherheitsvorrichtung (1, 1') fällt, oder von einem Beobachtungswinkel (β), unter dem der Beobachter (3) oder die Beobachtungseinrichtung die Sicherheitsvorrichtung (1, 1') beobachtet, abhängt, und
die Flächenelemente (8, 8a, 8b, 8c, 18a, 18b, 18c) derart angeordnet und ausgestaltet sind, dass in dem Betrieb der Sicherheitsvorrichtung (1, 1') eine Position des ersten Bildes (13, 14) in einem Beobachtungsraum (15) für den Beobachter (3) oder die Beobachtungsvorrichtung von dem Einfallswinkel (α) oder dem Beobachtungswinkel (β) abhängt,
**dadurch gekennzeichnet, dass**
das Verfahren zusätzlich den Schritt umfasst
Ausbilden mindestens eines Flächenelement (8, 8a, 8b, 8c, 18a, 18b, 18c), so dass es zusätzlich zu dem ersten diffraktiven Element ein zweites diffraktives Element mit einer sich in einer zweiten Richtung periodisch wiederholenden Struktur aufweist, wobei die erste Richtung und die zweite Richtung voneinander verschieden sind, derart, dass
sich das erste und das zweite diffraktive Element auf dem Flächenelement (8, 8a, 8b, 8c, 18a, 18b, 18c) zumindest teilweise räumlich überlagern,
das Flächenelement (8, 8a, 8b, 8c, 18a, 18b, 18c) mit dem zweiten diffraktiven Element einen Teil einer Gruppe mit mindestens zwei Flächenelementen (8, 8a, 8b, 8c, 18a, 18b, 18c) bildet,
das Flächenelement (8, 8a, 8b, 8c, 18a, 18b, 18c) mit dem zweiten diffraktiven Element derart angeordnet und ausgestaltet ist, dass die diffraktiven Elemente der Flächenelemente (8, 8a, 8b, 8c, 18a, 18b, 18c) der Gruppe für einen Beobachter (3) oder eine Beobachtungseinrichtung einen Bildpunkt des ersten Bildes oder eines zweiten Bildes (16, 17, 16', 17') in dem Beobachtungsraum (15) erzeugen, und
die Flächenelemente (8, 8a, 8b, 8c, 18a, 18b, 18c) einer ersten Gruppe von Flächenelementen, die einen Bildpunkt des ersten Bildes in dem Beobachtungsraum erzeugen, und die Flächenelemente (8, 8a, 8b, 8c, 18a, 18b, 18c) einer zweiten Gruppe von Flächenelementen, die einen Bildpunkt des zweiten Bildes in dem Beobachtungsraum erzeugen, derart angeordnet und ausgestaltet sind, dass in einem vorgegebenen Beobachtungsabstand ein Beobachter (3) oder eine Beobachtungseinrichtung den Bildpunkt des ersten Bildes und den Bildpunkt des zweiten Bildes nicht mehr als getrennte Bildpunkte erkennen kann, sondern einen einzigen Bildpunkt mit einer, verglichen mit einem von nur einer Gruppe erzeugten Bildpunkt, erhöhten Intensität wahrnimmt.

14. Verfahren zum Herstellen eines Gegenstands, insbesondere eines Dokuments, Personaldokuments, einer Urkunde, eines Zahlungsmittels, einer Banknote, eines Schecks, einer Bankkarte, einer Kreditkarte, einer Ware oder einer Verpackung, mit den Schritten Bereitstellen des Gegenstands,
Herstellen der Sicherheitsvorrichtung mit dem Verfahren nach Anspruch 13 und Aufbringen der Sicherheitsvorrichtung auf den Gegenstand.

## Claims

1. An optical security device (1, 1') comprising
a carrier (5), and
a plurality of surface elements (8, 8a, 8b, 8c, 18a, 18b, 18c) which are arranged distributed on a surface of the carrier (5) and having a first diffractive element, wherein the first diffractive element has a structure which repeats periodically in a first direction,
wherein the surface elements (8, 8a, 8b, 8c, 18a, 18b, 18c) having the first diffractive element form a plurality of groups respectively having at least two surface elements (8, 8a, 8b, 8c, 18a, 18b, 18c),
wherein the surface elements (8, 8a, 8b, 8c, 18a, 18b, 18c) having the first diffractive element of each group are of such a configuration and arrangement that the first diffractive elements produce for a viewer (3) or a viewing device a pixel of a first image (13, 14), wherein the first image (13, 14) is composed of the pixels produced by the plurality of groups,
wherein the surface elements (8, 8a, 8b, 8c, 18a, 18b, 18c) are of such an arrangement and configuration that in an operation of the security device (1, 1') the number of surface elements (8, 8a, 8b, 8c, 18a, 18b, 18c) of a group which produce a pixel of the first image (13, 14) or the surface elements (8, 8a, 8b, 8c, 18a, 18b, 18c) of the group, that are involved in the production of the pixel, depend on an angle of incidence (α) at which light from a light source (2) is incident on the security device (1, 1'), or on a viewing angle (β), at which the viewer (13) or the viewing device views the security device (1, 1'), and
wherein the surface elements (8, 8a, 8b, 8c, 18a, 18b, 18c) are of such an arrangement and configuration that in operation of the security device (1, 1') a position of the first image (13, 14) in a viewing space (15) for the viewer (3) or the viewing device depends on the angle of incidence (α) or the viewing angle (β),
**characterised in that**
at least one surface element (8, 8a, 8b, 8c, 18a, 18b, 18c) in addition to the first diffractive element has a second diffractive element with a structure which is periodically repeated in a second direction, wherein the first direction and the second direction are different from each other,
wherein the first and second diffractive elements are in at least partially spatially mutually superposed relationship on the surface element (8, 8a, 8b, 8c, 18a, 18b, 18c),
wherein the surface element (8, 8a, 8b, 8c, 18a, 18b, 18c) having the second diffractive element forms a part of a group having at least two surface elements (8, 8a, 8b, 8c, 18a, 18b, 18c),
wherein the surface element (8, 8a, 8b, 8c, 18a, 18b, 18c) having the second diffractive element is of such an arrangement and configuration that the diffractive elements of the surface elements (8, 8a, 8b, 8c, 18a, 18b, 18c) of the group produce for a viewer (3) or a viewing device a pixel of the first image or a second image (16, 17, 16', 17') in the viewing space (15), and
wherein the surface elements (8, 8a, 8b, 8c, 18a, 18b, 18c) of a first group of surface elements which produce a pixel of the first image in the viewing space and the surface elements (8, 8a, 8b, 8c, 18a, 18b, 18c) of a second group of surface elements which produce a pixel of the second image in the viewing space are of such an arrangement and configuration that at a predetermined viewing distance a viewer (3) or a viewing device can no longer perceive the pixel of the first image and the pixel of the second image as separate pixels, but perceives a single pixel of an intensity which is increased compared to a pixel produced by only one group.

2. An optical security device (1, 1') according to claim 1 **characterised in that**
a plurality of surface elements (8, 8a, 8b, 8c, 18a, 18b, 18c) in addition to the first diffractive element has a second diffractive element having a structure which is periodically repeated in a second direction, wherein the first direction and the second direction are different from each other,
wherein the first and diffractive elements are in at least partially spatially mutually superposed relationship on the surface element (8, 8a, 8b, 8c, 18a, 18b, 18c),
wherein the surface elements (8, 8a, 8b, 8c, 18a, 18b, 18c) having the second diffractive element form a plurality of groups each having at least two surface elements (8, 8a, 8b, 8c, 18a, 18b, 18c),
wherein the surface elements (8, 8a, 8b, 8c, 18a, 18b, 18c) having the second diffractive element are of such an arrangement and configuration that the second diffractive elements of the surface elements (8, 8a, 8b, 8c, 18a, 18b, 18c) of a group produce for a viewer (3) or a viewing device a pixel of a second image (16, 17, 16', 17') in the viewing space (15),
wherein the second image (16, 17, 16', 17') is composed of the pixels produced by the plurality of groups of surface elements (8, 8a, 8b, 8c, 18a, 18b, 18c) having the second diffractive element,
wherein the surface elements (8, 8a, 8b, 8c, 18a, 18b, 18c) are of such an arrangement and configuration that in an operation of the security device the number of surface elements (8, 8a, 8b, 8c, 18a, 18b, 18c) of a group which produce a pixel of the second image (16, 17, 16', 17') or the surface elements (8, 8a, 8b, 8c, 18a, 18b, 18c) of the group, that are involved in the production of the second pixel, depends on the angle of incidence or on the viewing angle, and
wherein the surface elements (8, 8a, 8b, 8c, 18a, 18b, 18c) are of such an arrangement and configuration that in the operation of the security device (1, 1') a position of the second image (16, 17, 16', 17') in the viewing space (15) for the viewer or the viewing device depends on the angle of incidence or the viewing angle.

3. A security device (1, 1') according to one of the preceding claims **characterised in that** the surface elements (8, 8a, 8b, 8c, 18a, 18b, 18c) are of such an arrangement and configuration that in an operation of the security device (1, 1') upon a change in the angle of incidence or the viewing angle from the viewer (3) or the viewing direction a movement of the first image (13, 14) and a movement of the second image (16, 17, 16', 17') can be perceived in the viewing space.

4. A security device (1, 1') according to the preceding claim **characterised in that** the perceptible movements of the first image (13, 14) and the second image (16, 17, 16', 17') are on curved, preferably circular or part-circular paths.

5. A security device (1, 1') according to the preceding claim **characterised in that** the curved paths of the movements of the first image (13, 14) and the second image (16, 17, 16', 17') are large in relation to an edge length of the surface of the carrier (5), that is covered by the surface elements (8, 8a, 8b, 8c, 18a, 18b, 18c), so that the movements of the first image (13, 14) and the second image (16, 17, 16', 17') can be perceived as linear movements.

6. A security device (1, 1') according to one of claims 3 to 5 **characterised in that** the movement of the first image (13, 14) is in opposite relationship to the movement of the second image (16, 17, 16', 17').

7. A security device (1, 1') according to one of the preceding claims **characterised in that** a plurality of surface elements (8, 8a, 8b, 8c, 18a, 18b, 18c) has more than two at least partially spatially mutually superposed diffractive elements which have structures periodically repeating in different directions.

8. A security device (1, 1') according to one of the preceding claims **characterised in that** the first diffractive element of a surface element (8, 8a, 8b, 8c, 18a, 18b, 18c) has a first grating constant and the second diffractive element of the same surface element (8, 8a, 8b, 8c, 18a, 18b, 18c) has a second grating constant, wherein the second grating constant is less than the first grating constant and wherein the ratio of the first grating constant and the second grating constant is less than 10, preferably less than 5 and particularly preferably less than 3.

9. A security device (1, 1') according to one of the preceding claims **characterised in that** the first diffractive element of a surface element (8, 8a, 8b, 8c, 18a, 18b, 18c) has a first grating constant and the second diffractive element of the same surface element (8, 8a, 8b, 8c, 18a, 18b, 18c) has a second grating constant, wherein the first grating constant and the second grating constant are the same.

10. A security device (1, 1') according to one of the preceding claims **characterised in that** the first diffractive element of a surface element (8, 8a, 8b, 8c, 18a, 18b, 18c) has a first grating constant and the second diffractive element of the same surface element (8, 8a, 8b, 8c, 18a, 18b, 18c) has a second grating constant, wherein the grating constants of the first diffractive element and the second diffractive element are respectively less than 10 µm and preferably respectively in a range of 0.2 µm to 5 µm.

11. A security device (1, 1') according to one of the preceding claims **characterised in that** the first direction of the first diffractive element and the second direction of the second diffractive element include an angle of more than 1°, preferably at least 15°.

12. An article, in particular a document, a personal identity document, a certificate, payment means, bank note, cheque, bank card, credit card, goods or packaging having a security device (1, 1') according to one of claims 1 to 11.

13. A process for producing a security device comprising the steps:
providing a carrier (5), and
producing a plurality of surface elements (8, 8a, 8b, 8c, 18a, 18b, 18c) arranged in distributed relationship and having a first diffractive element, wherein the first diffractive element has a structure which is periodically repeated in a first direction, on a surface of the carrier, in such a way that
the surface elements (8, 8a, 8b, 8c, 18a, 18b, 18c) having the first diffractive element form a plurality of groups respectively having at least two surface elements (8, 8a, 8b, 8c, 18a, 18b, 18c),
the surface elements (8, 8a, 8b, 8c, 18a, 18b, 18c) having the first diffractive element of each group are of such an arrangement and
configuration that the first diffractive elements produce for a viewer (3) or a viewing device a pixel of a first image (13, 14), wherein the first image (13, 14) is composed of the pixels produced by the plurality of groups,
the surface elements (8, 8a, 8b, 8c, 18a, 18b, 18c) are of such an arrangement and configuration that in operation of the security device (1, 1') the number of surface elements (8, 8a, 8b, 8c, 18a, 18b, 18c) of a group which produce a pixel of the first image (13, 14) or the surface elements (8, 8a, 8b, 8c, 18a, 18b, 18c) of the group, that are involved in the production of the pixel, depends on an angle of incidence (α) at which light from a light source (2) is incident on the security device (1, 1') or a viewing angle (β) at which the viewer (3) or the viewing device views the security device (1, 1'),
and
the surface elements (8, 8a, 8b, 8c, 18a, 18b, 18c) are of such an arrangement and configuration that in an operation of the security device (1, 1') a position of the first image (13, 14) in a viewing space (15) for the viewer (3) or the viewing device depends on the angle of incidence (α) or the viewing angle (β),
**characterised in that**
the method additionally includes the step:
producing at least one surface element (8, 8a, 8b, 8c, 18a, 18b, 18c) so that in addition to the first diffractive element it has a second diffractive element with a structure which is repeated periodically in a second direction, wherein the first direction and the second direction are different from each other, in such a way that
the first and second diffractive elements on the surface element (8, 8a, 8b, 8c, 18a, 18b, 18c) are in at least partially spatially mutually superposed relationship,
the surface element (8, 8a, 8b, 8c, 18a, 18b, 18c) having the second diffractive element forms a part of a group with at least two surface elements (8, 8a, 8b, 8c, 18a, 18b, 18c),
the surface element (8, 8a, 8b, 8c, 18a, 18b, 18c) having the second diffractive element is of such an arrangement and configuration that the diffractive elements of the surface elements (8, 8a, 8b, 8c, 18a, 18b, 18c) of the group produce for a viewer or a viewing device a pixel of the first image or a second image (16, 17, 16', 17') in the viewing space (15), and
the surface elements (8, 8a, 8b, 8c, 18a, 18b, 18c) of a first group of surface elements which produce a pixel of the first image in the viewing space and the surface elements (8, 8a, 8b, 8c, 18a, 18b, 18c) of a second group of surface elements which produce a pixel of the second image in the viewing space are of such an arrangement and configuration that at a predetermined viewing distance a viewer (3) or a viewing device can no longer perceive the pixel of the first image and the pixel of the second image as separate pixels but perceives a single pixel of an intensity which is increased in comparison with a pixel produced by only one group.

14. A process for producing an article, in particular a document, a personal identity document, a certificate, a payment means, a bank note, a cheque, a bank card, a credit card, an item or a packaging comprising the steps:
providing the article,
producing the security device with the process according to claim 13, and
applying the security device to the article.

## Revendications

1. Dispositif optique de sécurité (1, 1'), comprenant
un support (5) et
une pluralité d'éléments de surface (8, 8a, 8b, 8c, 18a, 18b, 18c) répartis sur une surface du support (5) et comprenant un premier élément diffractif, le premier élément diffractif présentant une structure se répétant de manière périodique dans une première direction,
les éléments de surface (8, 8a, 8b, 8c, 18a, 18b, 18c) formant avec le premier élément diffractif une pluralité de groupes comprenant respectivement au moins deux éléments de surface (8, 8a, 8b, 8c, 18a, 18b, 18c),
les éléments de surface (8, 8a, 8b, 8c, 18a, 18b, 18c) et le premier élément diffractif d'un groupe respectif étant agencés et conçus de telle manière que les premiers éléments diffractifs génèrent, pour un observateur (3) ou un dispositif d'observation, un pixel d'une première image (13, 14), la première image (13, 14) étant constituée des pixels générés par la pluralité de groupes,
les éléments de surface (8, 8a, 8b, 8c, 18a, 18b, 18c) étant agencés et conçus de telle manière que, lorsque le dispositif de sécurité (1, 1') est en fonctionnement, le nombre d'éléments de surface (8, 8a, 8b, 8c, 18a, 18b, 18c) d'un groupe qui génèrent un pixel de la première image (13, 14), ou les éléments de surface (8, 8a, 8b, 8c, 18a, 18b, 18c) du groupe qui participent à la génération du pixel, dépendent d'un angle d'incidence (α) sous lequel de la lumière d'une source de lumière (2) impacte le dispositif de sécurité (1, 1') ou d'un angle d'observation (β) sous lequel l'observateur (3) ou le dispositif d'observation observe le dispositif de sécurité (1, 1'), et
les éléments de surface (8, 8a, 8b, 8c, 18a, 18b, 18c) étant agencés et conçus de telle manière que, lorsque le dispositif de sécurité (1, 1') est en fonctionnement, une position de la première image (13, 14) dans un espace d'observation (15) dépend, pour l'observateur (3) ou le dispositif d'observation, de l'angle d'incidence (α) ou de l'angle d'observation (β),
**caractérisé en ce que**
au moins un élément de surface (8, 8a, 8b, 8c, 18a, 18b, 18c) comprend, en plus du premier élément diffractif, un deuxième élément diffractif présentant une structure se répétant de manière périodique dans une deuxième direction, la première direction et la deuxième direction étant différentes l'une de l'autre,
les premier et deuxième éléments diffractifs étant superposés spatialement de manière au moins partielle sur l'élément de surface (8, 8a, 8b, 8c, 18a, 18b, 18c),
l'élément de surface (8, 8a, 8b, 8c, 18a, 18b, 18c) comprenant le deuxième élément diffractif formant une partie d'un groupe comprenant au moins deux éléments de surface (8, 8a, 8c, 18a, 18b, 18c),
l'élément de surface (8, 8a, 8b, 8c, 18a, 18b, 18c) comprenant le deuxième élément diffractif étant agencé et conçu de telle manière que les éléments diffractifs des éléments de surface (8, 8a, 8b, 8c, 18a, 18b, 18c) du groupe génèrent, pour un observateur (3) ou un dispositif d'observation, un pixel de la première image ou d'une deuxième image (16, 17, 16', 17') dans l'espace d'observation (15), et
les éléments de surface (8, 8a, 8b, 8c, 18a, 18b, 18c) d'un premier groupe d'éléments de surface générant un pixel de la première image dans l'espace d'observation et les éléments de surface (8, 8a, 8b, 8c, 18a, 18b, 18c) d'un deuxième groupe d'éléments de surface générant un pixel de la deuxième image dans l'espace d'observation, étant agencés et conçus de telle manière qu'à une distance d'observation prédéterminée, un observateur (3) ou un dispositif d'observation ne peut plus reconnaître le pixel de la première image et le pixel de la deuxième image en tant que pixels séparés mais perçoit un pixel unique avec une intensité accrue par rapport à un pixel généré par un seul groupe.

2. Dispositif optique de sécurité (1, 1') selon la revendication 1, **caractérisé en ce qu'**une pluralité d'éléments de surface (8, 8a, 8b, 8c, 18a, 18b, 18c) comprennent, en plus du premier élément diffractif, un deuxième élément diffractif présentant une structure se répétant de manière périodique dans une deuxième direction, la première direction et la deuxième direction étant différentes l'une de l'autre,
les premier et deuxième éléments diffractifs étant superposés spatialement de manière au moins partielle sur l'élément de surface (8, 8a, 8b, 8c, 18a, 18b, 18c),
les éléments de surface (8, 8a, 8b, 8c, 18a, 18b, 18c) formant avec le deuxième élément diffractif une pluralité de groupes comprenant respectivement au moins deux éléments de surface (8, 8a, 8b, 8c, 18a, 18b, 18c),
les éléments de surface (8, 8a, 8b, 8c, 18a, 18b, 18c) comprenant le deuxième élément diffractif étant agencés et conçus de telle manière que les deuxièmes éléments diffractifs des éléments de surface (8, 8a, 8b, 8c, 18a, 18b, 18c) d'un groupe génèrent, pour un observateur (3) ou un dispositif d'observation, un pixel d'une deuxième image (16, 17, 16', 17') dans l'espace d'observation (15),
la deuxième image (16, 17, 16', 17') étant constituée des pixels générés par la pluralité de groupes d'éléments de surface (8, 8a, 8b, 8c, 18a, 18b, 18c) comprenant le deuxième élément diffractif,
les éléments de surface (8, 8a, 8b, 8c, 18a, 18b, 18c) étant agencés et conçus de telle manière que, lorsque le dispositif de sécurité (1, 1') est en fonctionnement, le nombre d'éléments de surface (8, 8a, 8b, 8c, 18a, 18b, 18c) d'un groupe qui génèrent un pixel de la deuxième image (16, 17, 16', 17'), ou les éléments de surface (8, 8a, 8b, 8c, 18a, 18b, 8b, 8b, 8b, 8b) du groupe qui participent à la génération du deuxième pixel, dépend de l'angle d'incidence ou de l'angle d'observation, et
les éléments de surface (8, 8a, 8b, 8c, 18a, 18b, 18c) étant agencés et conçus de telle manière que, lorsque le dispositif de sécurité (1, 1') est en fonctionnement, une position de la deuxième image (16, 17, 16', 17') dans l'espace d'observation (15) dépend, pour l'observateur (3) ou le dispositif d'observation, de l'angle d'incidence ou de l'angle d'observation.

3. Dispositif de sécurité (1, 1') selon l'une quelconque des revendications précédentes, **caractérisé en ce que** les éléments de surface (8, 8a, 8b, 8c, 18a, 18b, 18c) sont agencés et conçus de telle manière que, lorsque le dispositif de sécurité (1, 1') est en fonctionnement, à l'occasion d'une modification de l'angle d'incidence ou de l'angle d'observation, un déplacement de la première image (13, 14) et un déplacement de la deuxième image (16, 17, 16', 17') au sein de l'espace d'observation peuvent être perçus par l'observateur (3) ou par le dispositif d'observation.

4. Dispositif de sécurité (1, 1') selon la revendication précédente, **caractérisé en ce que** les déplacements perceptibles de la première image (13, 14) et de la deuxième image (16, 17, 16', 17') s'effectuent sur des trajectoires courbes, de manière préférée circulaires ou partiellement circulaires.

5. Dispositif de sécurité (1, 1') selon la revendication précédente, **caractérisé en ce que** les trajectoires courbes des déplacements de la première image (13, 14) et de la deuxième image (16, 17, 16', 17') sont d'une étendue supérieure à une longueur de bord de la surface du support (5) recouverte par les éléments de surface (8, 8a, 8b, 8c, 18a, 18b, 18c), de sorte que les déplacements de la première image (13, 14) et de la deuxième image (16, 17, 16', 17') peuvent être perçus en tant que déplacements linéaires.

6. Dispositif de sécurité (1, 1') selon l'une quelconque des revendications 3 à 5, **caractérisé en ce que** le déplacement de la première image (13, 14) s'effectue en sens contraire du déplacement de la deuxième image (16, 17, 16', 17').

7. Dispositif de sécurité (1, 1') selon l'une quelconque des revendications précédentes, **caractérisé en ce qu'**une pluralité d'éléments de surface (8, 8a, 8b, 8c, 18a, 18b, 18c) présentent plus de deux éléments diffractifs superposés spatialement de manière au moins partielle, qui présentent des structures se répétant de manière périodique dans des directions différentes.

8. Dispositif de sécurité (1, 1') selon l'une quelconque des revendications précédentes, **caractérisé en ce que** le premier élément diffractif d'un élément de surface (8, 8a, 8b, 8c, 18a, 18b, 18c) présente une première constante de réseau et le deuxième élément diffractif du même élément de surface (8, 8a, 8b, 8c, 18a, 18b, 18c) présente une deuxième constante de réseau, la deuxième constante de réseau étant inférieure à la première constante de réseau et le rapport entre la première constante de réseau et la deuxième constante de réseau étant inférieur à 10, de manière préférée inférieur à 5, et de manière particulièrement préférée inférieur à 3.

9. Dispositif de sécurité (1, 1') selon l'une quelconque des revendications précédentes, **caractérisé en ce que** le premier élément diffractif d'un élément de surface (8, 8a, 8b, 8c, 18a, 18b, 18c) présente une première constante de réseau et le deuxième élément diffractif du même élément de surface. (8, 8a, 8b, 8c, 18a, 18b, 18c) présente une deuxième constante de réseau, la première constante de réseau et la deuxième constante de réseau étant identiques.

10. Dispositif de sécurité (1, 1') selon l'une quelconque des revendications précédentes, **caractérisé en ce que** le premier élément diffractif d'un élément de surface (8, 8a, 8b, 8c, 18a, 18b, 18c) présente une première constante de réseau et le deuxième élément diffractif du même élément de surface (8, 8a, 8b, 8c, 18a, 18b, 18c) présente une deuxième constante de réseau, les constantes de réseau du premier élément diffractif et du deuxième élément diffractif étant respectivement inférieures à 10 µm, et se situent de manière préférée dans une plage comprise entre 0,2 µm et 5 µm.

11. Dispositif de sécurité (1, 1') selon l'une quelconque des revendications précédentes, **caractérisé en ce que** la première direction du premier élément diffractif et la deuxième direction du deuxième élément diffractif forment un angle supérieur à 1°, de manière préférée d'au moins 15°.

12. Objet, en particulier document, document personnel, certificat, moyen de paiement, billet de banque, chèque, carte bancaire, carte de crédit, marchandise ou emballage comprenant un dispositif de sécurité (1, 1') selon l'une quelconque des revendications 1 à 11.

13. Procédé de fabrication d'un dispositif de sécurité, comprenant les étapes consistant à :
fournir un support (5) et
réaliser, sur une surface du support (5), une pluralité d'éléments de surface (8, 8a, 8b, 8c, 18a, 18b, 18c) agencés de manière répartie et comprenant un premier élément diffractif, le premier élément diffractif présentant une structure se répétant de manière périodique dans une première direction, de telle manière que
les éléments de surface (8, 8a, 8b, 8c, 18a, 18b, 18c) forment avec le premier élément diffractif une pluralité de groupes comprenant respectivement au moins deux éléments de surface (8, 8a, 8b, 8c, 18a, 18b, 18c),
les éléments de surface (8, 8a, 8b, 8c, 18a, 18b, 18c) comprenant le premier élément diffractif d'un groupe respectif sont agencés et
conçus de telle manière que les premiers éléments diffractifs génèrent, pour un observateur (3) ou un dispositif d'observation, un pixel d'une première image (13, 14), la première image (13, 14) étant constituée des pixels générés par la pluralité de groupes,
les éléments de surface (8, 8a, 8b, 8c, 18a, 18b, 18c) sont agencés et
conçus de telle manière que, lorsque le dispositif de sécurité (1, 1') est en fonctionnement, le nombre d'éléments de surface (8, 8a, 8b, 8c, 18a, 18b, 18c) d'un groupe qui génèrent un pixel de la première image (13, 14), ou les éléments de surface (8, 8a, 8b, 8c, 18a, 18b,
18c) du groupe qui participent à la génération du pixel, dépend d'un angle d'incidence (α) sous lequel de la lumière d'une source de lumière (2) impacte le dispositif de sécurité (1, 1') ou d'un angle d'observation (β) sous lequel l'observateur (3) ou le dispositif d'observation observe le dispositif de sécurité (1, 1'), et
les éléments de surface (8, 8a, 8b, 8c, 18a, 18b, 18c) sont agencés et
conçus de telle manière que, lorsque le dispositif de sécurité (1, 1') est en fonctionnement, une position de la première image (13, 14) dans un espace d'observation (15) dépend, pour l'observateur (3) ou
le dispositif d'observation, de l'angle d'incidence (α) ou de l'angle d'observation (β),
**caractérisé en ce que**
le procédé comprend en outre l'étape consistant à
réaliser au moins un élément de surface (8, 8a, 8b, 8c, 18a, 18b, 18c) de sorte qu'il présente, en plus du premier élément diffractif, un deuxième élément diffractif comprenant une structure se répétant de manière périodique dans une deuxième direction, la première direction et la deuxième direction étant différentes l'une de l'autre, de telle manière que
les premier et deuxième éléments diffractifs sont superposés spatialement de manière au moins partielle sur l'élément de surface (8, 8a, 8b, 8c, 18a, 18b, 18c),
l'élément de surface (8, 8a, 8b, 8c, 18a, 18b, 18c) comprenant le deuxième élément diffractif forme une partie d'un groupe comprenant au moins deux éléments de surface (8, 8a, 8c, 18a, 18b, 18c),
l'élément de surface (8, 8a, 8b, 8c, 18a, 18b, 18c) comprenant le deuxième élément diffractif est agencé et conçu de telle manière que les éléments diffractifs des éléments de surface (8, 8a, 8b, 8c, 18a, 18b, 18c) du groupe génèrent, pour un observateur (3) ou un dispositif d'observation, un pixel de la première image ou d'une deuxième image (16, 17, 16', 17') dans l'espace d'observation (15), et
les éléments de surface (8, 8a, 8b, 8c, 18a, 18b, 18c) d'un premier groupe d'éléments de surface générant un pixel de la première image dans l'espace d'observation et les éléments de surface (8, 8a, 8b, 8c, 18a, 18b, 18c) d'un deuxième groupe d'éléments de surface générant un pixel de la deuxième image dans l'espace d'observation sont agencés et conçus de telle manière qu'à une distance d'observation prédéterminée, un observateur (3) ou un dispositif d'observation ne peut plus reconnaître le pixel de la première image et le pixel de la deuxième image en tant que pixels séparés mais perçoit un pixel unique avec une intensité accrue par rapport à un pixel généré par un seul groupe.

14. Procédé de fabrication d'un objet, en particulier d'un document, d'un document personnel, d'un certificat, d'un moyen de paiement, d'un billet de banque, d'un chèque, d'une carte bancaire, d'une carte de crédit, d'une marchandise ou d'un emballage, comprenant les étapes consistant à
fournir l'objet,
fabriquer le dispositif de sécurité selon le procédé selon la revendication 13 et
appliquer le dispositif de sécurité sur l'objet.
